# EUROPEAN PATENT APPLICATION

(11) **EP 4 369 779 A1**
(43) Date of publication of application: **15.05.2024**
(21) Application number: 22851723.1
(22) Date of filing: 14.06.2022
(51) Int. Cl.: H04W 28/06, H04W 4/20, H04W 8/08, H04W 24/02

(54) **COMMUNICATION METHOD AND APPARATUS**

(30) Priority: 06.08.2021 CN 202110903107
(71) Applicant: Huawei Technologies Co., Ltd., Shenzhen, Guangdong 518129 (CN)
(72) Inventor: ZHANG, Li, Shenzhen, Guangdong 518129 (CN); HAN, Jing, Shenzhen, Guangdong 518129 (CN); LI, Hong, Shenzhen, Guangdong 518129 (CN); SHEN, Zhongyi, Shenzhen, Guangdong 518129 (CN)
(74) Representative: Epping - Hermann - Fischer
(86) International application number: PCT/CN2022/098689
(87) International publication number: WO 2023/011007

(57) **Abstract**

This application provides a communication method and apparatus, to resolve a problem that a terminal device and a network device have inconsistent understandings of how the terminal device performs measurement. The method includes: receiving indication information from the network device and reporting a first message; and measuring a first measurement target based on the indication information and the first message. The indication information indicates to report measurement capability information in a first format, and the measurement capability information in the first format includes information about whether an interrupt is generated during measurement. The first message includes the measurement capability information of the terminal device, and the measurement capability information indicates whether a measurement gap is needed and whether the interrupt is generated when the first measurement target is measured. Based on the indication information sent by the network device, the network device and the terminal device may have consistent understandings of how the terminal device performs measurement.

## Description

### CROSS-REFERENCE TO RELATED APPLICATIONS

This application claims priority to Chinese Patent Application No. 202110903107.7, filed with the China National Intellectual Property Administration on August 6, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To measure a reference signal on a measurement target (measurement object, MO), a terminal device needs to switch a radio frequency chain from a serving cell to a target frequency, and therefore, generates a data interrupt in the serving cell. However, in some radio frequency architectures, when measuring a target frequency (or an MO), the terminal device may use an additional radio frequency chain, and does not need to switch the radio frequency chain from the serving cell to the target frequency, thereby avoiding the data interrupt generated in the serving cell within entire measurement time.

A network device may configure a measurement gap (measurement gap, MG) for the terminal device, to avoid a data packet loss. Specifically, the network device may determine, based on reporting of a measurement capability of the terminal device, whether to configure the MG for the terminal device. Currently, NeedForGap is defined in new radio (new radio, NR). The terminal device may report the measurement capability to the network device by using the NeedForGap. The terminal device may report a gap state or a no-gap state by using the NeedForGap, where the gap state indicates that the network device needs to configure the MG to complete the currently configured measurement, and the no-gap state indicates that the network device does not need to configure the MG to complete the currently configured measurement.

However, when the additional radio frequency chain is used for the measurement, switching or adjustment of the additional radio frequency chain before and after the measurement may cause the interrupt generated in the serving cell. Currently, the terminal device and the network device have inconsistent understandings of whether the interrupt is generated, resulting in the data packet loss.

### SUMMARY

This application provides a communication method and apparatus, to resolve a problem that a terminal device and a network device have inconsistent understandings of how the terminal device performs measurement.

According to a first aspect, this application provides a communication method. The method may be performed by a terminal device, or may be performed by a chip or a circuit. The method includes: receiving indication information from a network device, and sending a first message to the network device, where the indication information indicates to report measurement capability information in a first format, and the measurement capability information in the first format includes information about whether an interrupt is generated during measurement; and the first message carries the measurement capability information of the terminal device, and the measurement capability information indicates whether an MG is needed and whether the interrupt is generated when a first measurement target is measured; and measuring the first measurement target based on the indication information and the first message.

In this embodiment of this application, the terminal device may determine different measurement manners based on the indication information. Assuming that the terminal device generates the interrupt in a measurement process, if the network device indicates the terminal device to report the measurement capability information in the first format, the terminal device expects the network device to process the interrupt by configuring the MG or a network controlled small gap (network controlled small gap, NCSG), and performs measurement based on the MG or the NCSG. In this case, the terminal device does not generate an additional interrupt due to the measurement of the first measurement target. If the network device does not indicate the terminal device to report the measurement capability information in the first format, the terminal device does not expect the network device to process the interrupt by configuring the MG or an NCSG, and measurement behavior of the terminal device depends on whether the terminal device reports NeedForGap signaling and a reported value of NeedForGap. Based on the indication information from the network device, the terminal device and the network device have consistent understandings of whether the interrupt is generated and whether the MG or the NCSG is needed during the measurement, so that configuration and measurement can be performed based on the same understandings. This can avoid a case in which the terminal device cannot perform measurement or generates the additional interrupt during the measurement due to the inconsistent understandings, thereby reducing a data packet loss.

In a possible design, the first message may include a first information element and a second information element, where a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed.

In the foregoing design, whether the MG is needed and whether the interrupt is generated are respectively indicated by using the two information elements, so that flexibility of reporting the measurement capability information can be improved.

In a possible design, the first message may include a third information element, where a state of the third information element is one of the following three states: a fifth state indicating that the MG is needed, a sixth state indicating that no MG is needed and no interrupt is generated, or a seventh state indicating that no MG is needed and the interrupt is generated.

In the foregoing design, whether the MG is needed and whether the interrupt is generated are indicated by using the third information element, so that signaling overheads can be reduced.

In a possible design, when the first measurement target is measured based on the indication information and the first message, in a case in which the indication information indicates to report the measurement capability information in the first format, and the state of the first information element is the first state, the first measurement target may be measured based on a first capability of the terminal device, where the first capability is that the NCSG is supported, or the first capability is that the NCSG is not supported.

Alternatively, in a case in which the indication information indicates to report the measurement capability information in the first format, and the state of the third information element is the seventh state, the first measurement target may be measured based on a first capability of the terminal device, where the first capability is that the NCSG is supported, or the first capability is that the NCSG is not supported.

According to the foregoing design, when the indication information indicates the terminal device to report whether the interrupt is generated in the measurement capability information, and to report that the interrupt is generated in the measurement capability information, the terminal device may determine measurement behavior based on an NCSG capability of the terminal device, so that the measurement behavior matches the NCSG capability of the terminal device, thereby reducing a packet loss rate of data transmission.

In a possible design, when the first measurement target is measured based on the first capability of the terminal device, assuming that the first capability is that the NCSG is not supported, the first measurement target may be measured within a first MG; or assuming that the first capability is that the NCSG is supported, the first measurement target may be measured within a first MG, or the first measurement target may be measured within a first NCSG. In the foregoing design, the terminal device may perform measurement within the NCSG when supporting the NCSG. In this manner, the measurement behavior matches the NCSG capability of the terminal device, so that a packet loss rate of data transmission can be reduced.

In a possible design, when the first measurement target is measured based on the indication information and the first message, in a case in which the indication information indicates to report the measurement capability information in the first format, and the state of the first information element is the first state, the first measurement target is measured within a first MG or a first NCSG. Alternatively, in a case in which the indication information indicates to report the measurement capability information in the first format, and the state of the third information element is the seventh state, the first measurement target is measured within a first MG or a first NCSG.

In the foregoing design, the terminal device reports that the state of the first information element is the first state, or reports that the state of the third information element is the seventh state only when it is considered by default that the terminal device supports the NCSG or the terminal device supports only the NCSG when reporting that the interrupt is generated. If the interrupt is generated when the terminal device measures the first measurement target, but the terminal device does not support the NCSG, the terminal device reports that the state of the first information element is the second state and the state of the second information element is the third state, or reports that the state of the third information element is the fifth state. In this manner, the terminal device may not need to additionally report the first capability, and correspondingly, the network device may not need to read the first capability. In this way, signaling overheads can be reduced, and complexity of the terminal device and the network device can be further reduced.

In a possible design, the method further includes: receiving configuration information for configuring the first NCSG.

The network device and the terminal device determine same measurement behavior based on the measurement capability information. For example, the terminal device determines, based on the measurement capability information, to perform measurement within the first NCSG, and therefore expects the network device to configure the first NCSG, and the network device configures the first NCSG based on the configuration information sent based on the measurement capability information, so that the terminal device may receive the configuration information corresponding to the expected measurement behavior, thereby reducing a packet loss rate of data transmission, and improving data transmission reliability.

In a possible design, the configuration information includes first information indicating a start point of the first NCSG. The method further includes: determining the start point of the first NCSG as a time point determined based on a first time point and an advance relative to the first time point, where the first time point is a time point indicated by the first information, and the advance is a default value.

In the foregoing design, a time start point of effective measurement time of the NCSG may be aligned with a time start point of effective measurement time of the MG by using the default advance, and the terminal device may determine the start points of the MG and the NCSG based on the same configuration information, so that the terminal device can support dynamic switching between the MG and the NCSG, and signaling overheads caused by a reconfiguration can be reduced.

In a possible design, the configuration information includes an offset value relative to a reference time point, a first advance relative to a first time point, and a second advance relative to a second time point, where the first time point is a time point indicated by the offset value, and the second time point is a time point indicated by the first advance. The method further includes: determining a start point of the first NCSG as a time point determined based on the first time point, the first advance, and the second advance.

In the foregoing method, the second advance is added, to more flexibly indicate the start point of the NCSG. This helps alignment between the time start point of the effective measurement time of the NCSG and the time start point of the effective measurement time of the MG. The second advance is used for the NCSG. That is, when the configuration information is used for the MG, the start point of the MG is determined based on the second time point determined based on the offset value and the first advance. When the configuration information is used for the NCSG, the start point of the NCSG is determined based on the offset value, the first advance, and the second advance, so that the terminal device can support dynamic switching between the MG and the NCSG, and signaling overheads caused by a reconfiguration can be reduced.

In a possible design, the configuration information includes an offset value relative to a reference time point and a first advance relative to a first time point, where the first time point is a time point indicated by the offset value, and candidate values of the first advance include a value greater than 0.5. The method further includes: determining a start point of the first NCSG as a time point determined based on the first time point and the first advance.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

In a possible design, when the first measurement target is measured based on the indication information and the first message, in a case in which the indication information indicates to report the measurement capability information in the first format, the state of the first information element is the second state, and the state of the second information element is the third state, the first measurement target may be measured within a first MG.

Alternatively, in a case in which the indication information indicates to report the measurement capability information in the first format, and the state of the third information element is the fifth state, the first measurement target is measured within a first MG.

According to the foregoing design, the measurement behavior of the terminal device is consistent with the reported measurement capability information, so that the measurement behavior of the terminal device is consistent with configuration content of the network device, thereby reducing a packet loss rate of data transmission, and improving data transmission reliability.

In a possible design, when the first measurement target is measured based on the indication information and the first message, in a case in which the indication information indicates to report the measurement capability information in the first format, the state of the first information element is the second state, and the state of the second information element is the fourth state, the first measurement target may be measured based on a configuration with no MG and no NCSG, or the first measurement target is measured outside a second MG or a second NCSG, where the second MG or the second NCSG is configured by the network device for another measurement target.

Alternatively, in a case in which the indication information indicates to report the measurement capability information in the first format, and the state of the third information element is the sixth state, the first measurement target is measured based on a configuration with no MG and no NCSG, or the first measurement target is measured outside a second MG or a second NCSG, where the second MG or the second NCSG is configured by the network device for another measurement target.

According to the foregoing design, the measurement behavior of the terminal device is consistent with the reported measurement capability information, so that the measurement behavior of the terminal device is consistent with a configuration of the network device, thereby reducing a packet loss rate of data transmission, and improving data transmission reliability.

In a possible design, the method further includes: receiving configuration information for configuring the first MG.

According to the foregoing design, the network device and the terminal device determine the same measurement behavior based on the measurement capability information. For example, the terminal device determines, based on the measurement capability information, to perform measurement within the first MG, and therefore expects the network device to configure the first MG, and the network device configures the first MG based on the configuration information sent based on the measurement capability information, so that the terminal device may receive the configuration information corresponding to the expected measurement behavior, thereby reducing a packet loss rate of data transmission, and improving data transmission reliability.

According to a second aspect, this application provides a communication method. The method may be performed by a network device, or may be performed by a chip or a circuit. The method includes: sending indication information to a terminal device, and receiving a first message from the terminal device, where the indication information indicates to report measurement capability information in a first format, and the measurement capability information in the first format includes information about whether an interrupt is generated during measurement; the first message carries the measurement capability information of the terminal device, and the measurement capability information indicates whether a measurement gap MG is needed and whether the interrupt is generated when a first measurement target is measured; and sending, to the terminal device, configuration information for measuring the first measurement target, where the configuration information is related to the indication information, and the configuration information is related to the first message.

In this embodiment of this application, the network device may determine different measurement manners based on the indication information. Assuming that the terminal device generates the interrupt in a measurement process, if the network device indicates the terminal device to report the measurement capability information in the first format, the terminal device expects the network device to process the interrupt by configuring the MG or an NCSG, and the network device may configure the MG or the NCSG. In this case, the terminal device does not generate an additional interrupt due to the measurement of the first measurement target. If the network device does not indicate the terminal device to report the measurement capability information in the first format, the terminal device does not expect the network device to process the interrupt by configuring the MG or the NCSG, the network device does not configure the NCSG, and whether the network device configures the MG depends on whether the terminal device reports NeedForGap signaling and a reported value of NeedForGap. Based on the indication information from the network device, the terminal device and the network device have consistent understandings of whether the interrupt is generated and whether the MG or the NCSG is needed during the measurement, so that configuration and measurement can be performed based on the same understandings. This avoids a case in which the terminal device cannot perform measurement or generates the additional interrupt during the measurement due to the inconsistent understandings, thereby reducing a data packet loss.

In a possible design, the first message includes a first information element and a second information element, where a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed.

In the foregoing design, whether the MG is needed and whether the interrupt is generated are respectively indicated by using the two information elements, so that flexibility of reporting the measurement capability information can be improved.

In a possible design, the first message includes a third information element, where a state of the third information element is one of the following three states: a fifth state indicating that the MG is needed, a sixth state indicating that no MG is needed and no interrupt is generated, or a seventh state indicating that no MG is needed and the interrupt is generated.

In the foregoing design, whether the MG is needed and whether the interrupt is generated are indicated by using the third information element, so that signaling overheads can be reduced.

In a possible design, in a case in which the indication information indicates to report the measurement capability information in the first format, and the state of the first information element is a first state, the configuration information is related to a first capability of the terminal device, and the first capability is that an NCSG is supported, or the first capability is that an NCSG is not supported.

Alternatively, in a case in which the indication information indicates to report the measurement capability information in the first format, and the state of the third information element is the seventh state, the configuration information is related to a first capability of the terminal device, and the first capability is that an NCSG is supported, or the first capability is that an NCSG is not supported.

According to the foregoing design, the network device may determine, based on an NCSG capability of the terminal device, whether to configure the MG or the NCSG, so that configuration content of the network device matches the NCSG capability of the terminal device, thereby reducing a packet loss rate of data transmission.

In a possible design, assuming that the first capability is that an NCSG is supported, the configuration information includes first configuration information for configuring the NCSG for the first measurement target, or the configuration information includes second configuration information for configuring the MG for the first measurement target. Alternatively, assuming that the first capability is that an NCSG is not supported, the configuration information includes second configuration information for configuring the MG for the first measurement target.

According to the foregoing design, assuming that the indication information indicates to report whether the interrupt is generated in the measurement capability information, and indicates to report that the interrupt is generated in the measurement capability information, the network device may configure the NCSG for the terminal device when the terminal device supports the NCSG. In this manner, configuration content of the network device matches an NCSG capability of the terminal device, so that a packet loss rate of data transmission can be reduced.

In a possible design, in a case in which the indication information indicates to report the measurement capability information in the first format, and the state of the first information element is the first state, the configuration information includes first configuration information for configuring the NCSG for the first measurement target, or the configuration information includes second configuration information for configuring the MG for the first measurement target. Alternatively, in a case in which the indication information indicates to report the measurement capability information in the first format, and the state of the third information element is the seventh state, the configuration information includes first configuration information for configuring the NCSG for the first measurement target, or the configuration information includes second configuration information for configuring the MG for the first measurement target.

In the foregoing design, the terminal device reports that the state of the first information element is the first state, or reports that the state of the third information element is the seventh state only when it is considered by default that the terminal device supports the NCSG or the terminal device supports only the NCSG when reporting that the interrupt is generated. If the interrupt is generated when the terminal device measures the first measurement target, but the terminal device does not support the NCSG, the terminal device reports that the state of the first information element is the second state and the state of the second information element is the third state, or reports that the state of the third information element is the fifth state. In this manner, the terminal device may not need to additionally report the first capability, and correspondingly, the network device may not need to read the first capability. In this way, signaling overheads can be reduced, and complexity of the terminal device and the network device can be further reduced.

In a possible design, the first configuration information includes first information indicating a start point of the first NCSG. The method further includes: determining the start point of the first NCSG as a time point determined based on a first time point and an advance relative to the first time point, where the first time point is a time point indicated by the first information, and the advance is a default value.

In the foregoing method, a time start point of effective measurement time of the NCSG may be aligned with a time start point of effective measurement time of the MG by using the default advance, and the terminal device may determine the start points of the MG and the NCSG based on the same configuration information, so that the terminal device can support dynamic switching between the MG and the NCSG, and signaling overheads caused by a reconfiguration can be reduced.

In a possible design, the configuration information includes second information for configuring a start point of a first NCSG, where the second information includes an offset value relative to a reference time point, a first advance relative to a first time point, and a second advance for the start point of the first NCSG relative to a second time point, the first time point is a time point indicated by the offset value, and the second time point is a time point indicated by the first advance.

In the foregoing method, the second advance is added, to more flexibly indicate the start point of the NCSG. This helps alignment between the time start point of the effective measurement time of the NCSG and the time start point of the effective measurement time of the MG. The second advance is used for the NCSG. That is, when the configuration information is used for the MG, the start point of the MG is the second time point determined based on the first time point and the first advance relative to the first time point; and when the configuration information is used for the NCSG, the start point of the NCSG is the time point determined based on the second time point and the second advance relative to the second time point, so that the terminal device can support dynamic switching between the MG and the NCSG, and signaling overheads caused by a reconfiguration can be reduced.

In a possible design, the configuration information includes third information for configuring a start point of a first NCSG, where the third information includes an offset value relative to a reference time point and a first advance for the start point of the first NCSG relative to a first time point, the first time point is a time point indicated by the offset value, and candidate values of the first advance include a value greater than 0.5.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

In a possible design, in a case in which the indication information indicates to report the measurement capability information in the first format, the state of the first information element is the second state, and the state of the second information element is the third state, the configuration information includes second configuration information, and the second configuration information is used for configuring the MG for the first measurement target.

Alternatively, in a case in which the indication information indicates to report the measurement capability information in the first format, and the state of the third information element is the fifth state, the configuration information includes second configuration information, and the second configuration information is used for configuring the MG for the first measurement target. According to the foregoing design, configuration content of the network device is consistent with the reported measurement capability information, so that the configuration content of the network device is consistent with measurement behavior of the terminal device, thereby reducing a packet loss rate of data transmission, and improving data transmission reliability.

In a possible design, in a case in which the indication information indicates to report the first message, the state of the first information element is the second state, and the state of the second information element is the fourth state, the configuration information does not include information for configuring an NCSG for the first measurement target and information for configuring the MG for the first measurement target.

Alternatively, in a case in which the indication information indicates to report the first message, and the state of the first information element is the sixth state, the configuration information does not include information for configuring an NCSG for the first measurement target and information for configuring the MG for the first measurement target.

According to the foregoing design, configuration content of the network device is consistent with the reported measurement capability information, so that the configuration of the network device is consistent with measurement behavior of the terminal device, thereby reducing a packet loss rate of data transmission, and improving data transmission reliability.

According to a third aspect, this application provides a communication method. The method may be performed by a terminal device, or may be performed by a chip or a circuit. The method includes: sending a first message to a network device, and measuring a first measurement target based on the first message, where the first message indicates whether a measurement gap MG is needed and whether an interrupt is generated when the first measurement target is measured, and indicates whether there is an association relationship between a state indicating whether the MG is needed and a state indicating whether the interrupt is generated.

In this embodiment of this application, the relationship between the state indicating whether the MG is needed and the state indicating whether the interrupt is generated is restricted, regardless of whether the terminal device and the network device support an NCSG, so that the network device and the terminal device have same understandings of the state indicating whether the MG is needed and the state indicating whether the interrupt is generated, and therefore the network device and the terminal device may have same understandings of the reported measurement capability information. This avoids a case in which the terminal device cannot perform measurement or generates an additional interrupt during the measurement due to the inconsistent understandings, thereby reducing a data packet loss.

In a possible design, the first message includes a first information element and a second information element, where a state of the first information element is one of the following two states: a first state indicating that the MG is needed, or a second state indicating that no MG is needed, and a state of the second information element is one of the following two states: a third state indicating that the interrupt is generated, or a fourth state indicating that no interrupt is generated, and the first information element and the second information element meet at least one of the following association relationships: the second state is associated with the fourth state; and the first state is associated with the third state or the fourth state.

In the foregoing design, a relationship between the state of the first information element and the state of the second information element is restricted, so that the terminal device can report, only when the state of the first information element is the first state, the third state indicating that the interrupt is generated, or the terminal device can report, only when the state of the first information element is the second state, the fourth state indicating that the interrupt is generated. In other words, the terminal device may not report, when the state of the first information element is the second state, the third state indicating that the interrupt is generated. When the state of the first information element in the measurement capability information is the second state, regardless of whether the terminal device and the network device support an NCSG, understandings of the measurement capability information by the terminal device and the network device may be determined as that no MG is needed and no interrupt is generated. This can avoid inconsistent understandings of the state of the first information element by the terminal device and the network device, thereby reducing a data packet loss.

When the state of the first information element in the measurement capability information is the second state, the terminal device does not expect the network device to configure the MG or the NCSG and performs measurement outside the MG or the NCSG. When the state of the first information element in the measurement capability information is the first state, the terminal device determines a measurement manner based on a reported value (the third state or the fourth state) of the second information element, and the network device and the terminal device have consistent understandings of how the terminal device performs measurement. This can avoid a case in which the terminal device cannot perform measurement or generates an additional interrupt during the measurement due to the inconsistent understandings, thereby reducing a data packet loss.

In a possible design, the first message includes a first information element and a third information element, and a state of the third information element is one of the following three states: a fifth state indicating that the MG is needed, a sixth state indicating that no MG is needed and no interrupt is generated, or a seventh state indicating that no MG is needed and the interrupt is generated, where the first information element and the third information element meet at least one of the following association relationships: the first state is associated with the fifth state or the seventh state; and the second state is associated with the sixth state.

In the foregoing implementation, a relationship between the state of the first information element and the state of the third information element is restricted, so that the terminal device can report the seventh state only when the state of the first information element is the first state, or when the terminal device reports that no MG is needed (that is, the state of the first information element is the second state), the state of the third information element can only be the sixth state, that is, the third information element can only report that no MG is needed and no interrupt is generated, in other words, when the state of the first information element is the second state, the terminal device may not report that the interrupt is generated. When the state of the first information element in the measurement capability information is the second state, regardless of whether the terminal device and the network device support an NCSG, understandings of the measurement capability information by the terminal device and the network device may be determined as that no interrupt is generated, and the terminal device does not expect the network device to configure the MG or the NCSG and performs measurement outside the MG or the NCSG. When the state of the first information element in the measurement capability information is the first state, the terminal device determines a measurement manner based on a reported value (the fifth state or the seventh state) of the third information element. In the foregoing manner, the network device and the terminal device have consistent understandings of how the terminal device performs measurement. This can avoid a case in which the terminal device cannot perform measurement or generates an additional interrupt during the measurement due to the inconsistent understandings, thereby reducing a data packet loss.

In a possible design, when the first measurement target is measured based on the first message, in a case in which the state of the second information element is the third state, the first measurement target may be measured based on a first capability of the terminal device, where the first capability is that a network controlled small measurement gap NCSG is supported, or the first capability is that an NCSG is not supported.

Alternatively, when the first measurement target is measured based on the first message, in a case in which the state of the third information element is the seventh state, the first measurement target may be measured based on a first capability of the terminal device, where the first capability is that a network controlled small measurement gap NCSG is supported, or the first capability is that an NCSG is not supported.

In the foregoing design, an association between the third state of the second information element (or the seventh state of the third information element) and the first state of the first information element is restricted, so that the terminal device may determine measurement behavior based on the state of the second information element (or the third information element), and by specifying the measurement behavior, data transmission reliability can be improved.

In a possible design, when the first measurement target is measured based on the first capability of the terminal device, assuming that the first capability is that the NCSG is not supported, the first measurement target may be measured within a first MG; or assuming that the first capability is that the NCSG is supported, the first measurement target may be measured within a first MG, or the first measurement target may be measured within a first NCSG.

According to the foregoing design, the terminal device may perform measurement within the NCSG when supporting the NCSG, so that the measurement behavior matches an NCSG capability of the terminal device, thereby reducing a packet loss rate of data transmission.

In a possible design, when the first measurement target is measured based on the first message, in a case in which the state of the second information element is the third state, the first measurement target may be measured within a first MG, or the first measurement target may be measured within a first NCSG.

Alternatively, when the first measurement target is measured based on the first message, in a case in which the state of the third information element is the seventh state, the first measurement target may be measured within a first MG, or the first measurement target may be measured within a first NCSG.

In the foregoing design, the terminal device reports that the state of the second information element is the third state, or reports that the state of the third information element is the seventh state only when it is considered by default that the terminal device supports the NCSG or the terminal device supports only the NCSG when reporting that the interrupt is generated, so that complexity can be reduced. If the interrupt is generated when the terminal device measures the first measurement target but the terminal device does not support the NCSG, the terminal device reports that the state of the second information element is the fourth state, or reports that the state of the third information element is the fifth state. In this manner, the terminal device may not need to additionally report the first capability, and correspondingly, the network device may not need to read the first capability. In this way, signaling overheads can be reduced, and complexity of the terminal device and the network device can be further reduced.

In a possible design, the method further includes: receiving configuration information for configuring the first NCSG. According to the foregoing design, the network device and the terminal device determine same measurement behavior according to a rule. For example, the terminal device determines to perform measurement within the NCSG, and therefore expects the network device to configure the NCSG, and the NCSG is configured in the configuration information sent by the network device, so that the terminal device and the network device have consistent understandings of the measurement behavior. This can avoid a data packet loss caused by the inconsistent understandings of the measurement behavior, and improve data transmission reliability.

In a possible design, the configuration information includes first information indicating a start point of the first NCSG. The method further includes: determining the start point of the first NCSG based on an advance relative to a first time point and the first information, where the first time point is a time point indicated by the first information, and the advance is a default value.

In the foregoing method, a time start point of effective measurement time of the NCSG may be aligned with a time start point of effective measurement time of the MG by using the default advance, and the terminal device may determine the start points of the MG and the NCSG based on the same configuration information, so that the terminal device can support dynamic switching between the MG and the NCSG, and signaling overheads caused by a reconfiguration can be reduced.

In a possible design, the configuration information includes an offset value relative to a reference time point, a first advance relative to a first time point, and a second advance relative to a second time point, where the first time point is a time point indicated by the offset value, and the second time point is a time point indicated by the first advance. The method further includes: determining the start point of the first NCSG based on the offset value, the first advance, and the second advance. In the foregoing method, an advance is added, to more flexibly indicate the start point of the NCSG. This helps alignment between the time start point of the effective measurement time of the NCSG and the time start point of the effective measurement time of the MG. The second advance is only used for the NCSG. That is, when the configuration information is used for the MG, the start point of the MG is the second time point determined based on the first time point and the first advance relative to the first time point; and when the configuration information is used for the NCSG, the start point of the NCSG is the time point determined based on the second time point and the second advance relative to the second time point, so that the terminal device can support dynamic switching between the MG and the NCSG, and signaling overheads caused by a reconfiguration can be reduced.

In a possible design, the configuration information includes an offset value relative to a reference time point and a first advance relative to a first time point, where the first time point is a time point indicated by the offset value, and candidate values of the first advance include a value greater than 0.5. The method further includes: determining the start point of the first NCSG based on the offset value and the first advance.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

In a possible design, when the first measurement target is measured based on the first message, in a case in which the state of the first information element is the first state, and the state of the second information element is the fourth state, the first measurement target may be measured within a first MG; or in a case in which the state of the third information element is the fifth state, the first measurement target is measured within a first MG. According to the foregoing design, the measurement behavior of the terminal device is consistent with the reported measurement capability information, so that the measurement behavior of the terminal device is consistent with a configuration of the network device, thereby reducing a packet loss rate of data transmission, and improving data transmission reliability.

In a possible design, when the first measurement target is measured based on the first message, in a case in which the state of the first information element is the second state, and the state of the second information element is the fourth state, the first measurement target may be measured based on a configuration with no MG and no NCSG, or the first measurement target is measured outside a second MG or a second NCSG, where the second MG or the second NCSG is configured by the network device for another measurement target.

Alternatively, in a case in which the state of the third information element is the sixth state, the first measurement target is measured based on a configuration with no MG and no NCSG, or the first measurement target is measured outside a second MG or a second NCSG, where the second MG or the second NCSG is configured by the network device for another measurement target.

According to the foregoing design, the measurement behavior of the terminal device is consistent with the reported measurement capability information, so that the measurement behavior of the terminal device is consistent with a configuration of the network device, thereby reducing a packet loss rate of data transmission, and improving data transmission reliability.

In a possible design, the method further includes: receiving configuration information for configuring the first MG.

According to the foregoing design, the network device and the terminal device determine same measurement behavior according to a rule. For example, the terminal device determines to perform measurement within the MG, and therefore expects the network device to configure the MG, and the MG is configured in the configuration information sent by the network device, so that the terminal device and the network device have consistent understandings of the measurement behavior.

According to a fourth aspect, this application provides a communication method. The method may be performed by a network device, or may be performed by a chip or a circuit. The method includes: receiving a first message from a terminal device, and sending, to the terminal device based on the first message, configuration information for measuring a first measurement target, where the first message indicates whether a measurement gap MG is needed and whether an interrupt is generated when the first measurement target is measured, and indicates whether there is an association relationship between a state indicating whether the MG is needed and a state indicating whether the interrupt is generated. The configuration information is related to the first message.

In this embodiment of this application, the relationship between the state indicating whether the MG is needed and the state indicating whether the interrupt is generated is restricted, regardless of whether the terminal device and the network device support an NCSG, so that the network device and the terminal device have same understandings of the state indicating whether the MG is needed and the state indicating whether the interrupt is generated, and therefore the network device and the terminal device may have consistent understandings of the reported measurement capability information.

In a possible design, the first message includes a first information element and a second information element, where a state of the first information element is one of the following two states: a first state indicating that the MG is needed, or a second state indicating that no MG is needed, and a state of the second information element is one of the following two states: a third state indicating that the interrupt is generated, or a fourth state indicating that no interrupt is generated, and the first information element and the second information element meet at least one of the following association relationships: the second state is associated with the fourth state; and the first state is associated with the third state or the fourth state.

In the foregoing design, based on the relationship between the state of the first information element and the state of the second information element, when the first information element indicates the first state, the terminal device reports, by using the second information element, the third state indicating that the interrupt is generated. Alternatively, when the first information element indicates the second state, the terminal device reports, by using the second information element, the fourth state indicating that no interrupt is generated. In other words, when the first information element indicates the second state, the terminal device does not report the third state indicating that the interrupt is generated. When the first information element indicates the second state, regardless of whether the terminal device and the network device support an NCSG, the terminal device and the network device have consistent understandings of the measurement capability information, that is, no MG is needed and no interrupt is generated. This can avoid inconsistent understandings of the state of the first information element by the terminal device and the network device, thereby reducing a data packet loss.

When the first information indicates the second state, the terminal device does not expect the network device to configure the MG or the NCSG and performs measurement outside the MG or the NCSG. When the state of the first information element in the measurement capability information is the first state, the terminal device determines a measurement manner based on a reported value (the third state or the fourth state) of the second information element, and the network device and the terminal device have consistent understandings of how the terminal device performs measurement. This can avoid a case in which the terminal device cannot perform measurement or generates an additional interrupt during the measurement due to the inconsistent understandings, thereby reducing a data packet loss.

In a possible design, the first message includes a first information element and a third information element, and a state of the third information element is one of the following three states: a fifth state indicating that the MG is needed, a sixth state indicating that no MG is needed and no interrupt is generated, or a seventh state indicating that no MG is needed and the interrupt is generated, where the first information element and the third information element meet at least one of the following association relationships: the first state is associated with the fifth state or the seventh state; and the second state is associated with the sixth state.

In the foregoing implementation, a relationship between the state of the first information element and the state of the third information element is restricted, so that the terminal device can report the seventh state only when the state of the first information element is the first state, or when the terminal device reports that no MG is needed (that is, the state of the first information element is the second state), the state of the third information element can only be the sixth state, that is, the third information element can only report that no MG is needed and no interrupt is generated, in other words, when the state of the first information element is the second state, the terminal device may not report that the interrupt is generated. When the state of the first information element in the measurement capability information is the second state, regardless of whether the terminal device and the network device support an NCSG, understandings of the measurement capability information by the terminal device and the network device may be determined as that no interrupt is generated, and the terminal device does not expect the network device to configure the MG or the NCSG and performs measurement outside the MG or the NCSG. When the state of the first information element in the measurement capability information is the first state, the terminal device determines a measurement manner based on a reported value (the fifth state or the seventh state) of the third information element. In the foregoing manner, the network device and the terminal device have consistent understandings of how the terminal device performs measurement. This can avoid a case in which the terminal device cannot perform measurement or generates an additional interrupt during the measurement due to the inconsistent understandings, thereby reducing a data packet loss.

In a possible design, in a case in which the state of the second information element is the third state, configuration information is determined based on a first capability of the terminal device, and the first capability is that a network controlled small measurement gap NCSG is supported, or the first capability is that an NCSG is not supported.

Alternatively, in a case in which the state of the third information element is the seventh state, configuration information is determined based on a first capability of the terminal device, and the first capability is that a network controlled small measurement gap NCSG is supported, or the first capability is that an NCSG is not supported.

In the foregoing design, an association between the third state of the second information element (or the seventh state of the third information element) and the first state of the first information element is restricted, so that the network device can determine the configuration information based on the state of the second information element (or the third information element), and by specifying configuration information corresponding to each state, data transmission reliability can be improved.

In a possible design, assuming that the first capability is that the NCSG is supported, the configuration information includes first configuration information for configuring the NCSG for the first measurement target, or the configuration information includes second configuration information for configuring the MG for the first measurement target. Alternatively, assuming that the first capability is that the NCSG is not supported, the configuration information includes second configuration information for configuring the MG for the first measurement target. According to the foregoing design, the network device may determine, based on an NCSG capability of the terminal device, whether to configure the MG or the NCSG. In this manner, configuration content of the network device matches the NCSG capability of the terminal device, so that a packet loss rate of data transmission can be reduced.

In a possible design, in a case in which the state of the second information element is the third state, the configuration information includes first configuration information for configuring the NCSG for the first measurement target, or the configuration information includes second configuration information for configuring the MG for the first measurement target. Alternatively, in a case in which the state of the third information element is the seventh state, the configuration information includes first configuration information for configuring the NCSG for the first measurement target, or the configuration information includes second configuration information for configuring the MG for the first measurement target.

In the foregoing design, the terminal device reports that the state of the second information element is the third state, or reports that the state of the third information element is the seventh state only when it is considered by default that the terminal device supports the NCSG or the terminal device supports only the NCSG when reporting that the interrupt is generated. If the interrupt is generated when the terminal device measures the first measurement target but the terminal device does not support the NCSG, the terminal device reports that the state of the second information element is the fourth state, or reports that the state of the third information element is the fifth state. In this manner, the terminal device may not need to additionally report the first capability, and correspondingly, the network device may not need to read the first capability. In this way, signaling overheads can be reduced, and complexity of the terminal device and the network device can be further reduced.

In a possible design, the first configuration information includes first information indicating a start point of the NCSG. The method further includes: determining the start point of the NCSG based on an advance relative to a first time point and the first information, where the first time point is a time point indicated by the first information, and the advance is a default value.

In the foregoing method, a time start point of effective measurement time of the NCSG may be aligned with a time start point of effective measurement time of the MG by using the default advance, and the terminal device may determine the start points of the MG and the NCSG based on the same configuration information, so that the terminal device can support dynamic switching between the MG and the NCSG, and signaling overheads caused by a reconfiguration can be reduced.

In a possible design, the configuration information includes an offset value relative to a reference time point, a first advance relative to a first time point, and a second advance for the start point of the first NCSG relative to a second time point, where the first time point is a time point indicated by the offset value, and the second time point is a time point indicated by the first advance.

In the foregoing method, an advance is added, to more flexibly indicate the start point of the NCSG. This helps alignment between the time start point of the effective measurement time of the NCSG and the time start point of the effective measurement time of the MG. The second advance is only used for the NCSG. That is, when the configuration information is used for the MG, the start point of the MG is the second time point determined based on the first time point and the first advance relative to the first time point; and when the configuration information is used for the NCSG, the start point of the NCSG is the time point determined based on the second time point and the second advance relative to the second time point, so that the terminal device can support dynamic switching between the MG and the NCSG, and signaling overheads caused by a reconfiguration can be reduced.

In a possible design, the configuration information includes an offset value relative to a reference time point and a first advance for the start point of the first NCSG relative to a first time point, where the first time point is a time point indicated by the offset value, and candidate values of the first advance include a value greater than 0.5.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

In a possible design, in a case in which the state of the first information element is the second state, and the state of the second information element is the fourth state, the configuration information does not include information for configuring an NCSG for the first measurement target and information for configuring the MG for the first measurement target.

Alternatively, in a case in which the state of the third information element is the sixth state, the configuration information does not include information for configuring an NCSG for the first measurement target and information for configuring the MG for the first measurement target.

According to the foregoing design, in this manner, configuration content of the network device matches the measurement capability information of the terminal device, so that the configuration content of the network device is consistent with measurement behavior of the terminal device, thereby reducing a packet loss rate of data transmission.

In a possible design, in a case in which the state of the first information element is the first state, and the state of the second information element is the fourth state, the configuration information includes second configuration information, and the second configuration information is used for configuring the MG for the first measurement target. Alternatively, in a case in which the state of the third information element is the fifth state, the configuration information includes second configuration information, and the second configuration information is used for configuring the MG for the first measurement target.

According to the foregoing design, in this manner, configuration content of the network device matches the measurement capability information of the terminal device, so that the configuration content of the network device is consistent with measurement behavior of the terminal device, thereby reducing a packet loss rate of data transmission.

According to a fifth aspect, this application provides a communication method. The method may be performed by a terminal device, or may be performed by a chip or a circuit. The method includes: receiving first information from a network device, and determining a start point of a first NCSG based on the first information and a first advance, where the first information is used for configuring the start point of the NCSG; and the first advance is a default value.

In the foregoing method, a time start point of effective measurement time of the NCSG may be aligned with a time start point of effective measurement time of the MG by using the default advance, and the terminal device may determine the start points of the MG and the NCSG based on the same information, so that the terminal device can support dynamic switching between the MG and the NCSG, and signaling overheads caused by a reconfiguration can be reduced. According to a sixth aspect, this application provides a communication method. The method may be performed by a network device, or may be performed by a chip or a circuit. The method includes: sending first information to a terminal device, and determining a start point of a first NCSG based on the first information and a first advance, where the first information is used for configuring the start point of the first NCSG; and the first advance is a default value.

In the foregoing method, a time start point of effective measurement time of the NCSG may be aligned with a time start point of effective measurement time of the MG by using the default advance, and the terminal device may determine the start points of the MG and the NCSG based on the same information, so that the terminal device can support dynamic switching between the MG and the NCSG, and signaling overheads caused by a reconfiguration can be reduced. According to a seventh aspect, this application provides a communication method. The method may be performed by a terminal device, or may be performed by a chip or a circuit. The method includes: receiving second information from a network device, and determining a start point of a first NCSG based on the second information, where the second information is used for configuring the start point of the NCSG, the second information includes an offset value relative to a reference time point, a first advance relative to a first time point, and a second advance for the start point of the first NCSG relative to a second time point, the first time point is a time point indicated by the offset value, and the second time point is a time point indicated by the first advance.

In the foregoing method, an advance is added, to more flexibly indicate the start point of the NCSG. This helps alignment between the time start point of the effective measurement time of the NCSG and the time start point of the effective measurement time of the MG. The second advance is only used for the NCSG. That is, when the configuration information is used for the MG, the start point of the MG is the second time point determined based on the first time point and the first advance relative to the first time point; and when the configuration information is used for the NCSG, the start point of the NCSG is the time point determined based on the second time point and the second advance relative to the second time point, so that the terminal device can support dynamic switching between the MG and the NCSG, and signaling overheads caused by a reconfiguration can be reduced.

According to an eighth aspect, this application provides a communication method. The method may be performed by a network device, or may be performed by a chip or a circuit. The method includes: sending second information to a terminal device, and determining a start point of a first NCSG based on the second information. The second information is used for configuring the start point of the NCSG, and the second information includes an offset value relative to a reference time point, a first advance relative to a first time point, and a second advance for the start point of the first NCSG relative to a second time point, where the first time point is a time point indicated by the offset value, and the second time point is a time point indicated by the first advance.

In the foregoing method, an advance is added, to more flexibly indicate the start point of the NCSG. This helps alignment between the time start point of the effective measurement time of the NCSG and the time start point of the effective measurement time of the MG. The second advance is only used for the NCSG. That is, when the configuration information is used for the MG, the start point of the MG is the second time point determined based on the first time point and the first advance relative to the first time point; and when the configuration information is used for the NCSG, the start point of the NCSG is the time point determined based on the second time point and the second advance relative to the second time point, so that the terminal device can support dynamic switching between the MG and the NCSG, and signaling overheads caused by a reconfiguration can be reduced.

According to a ninth aspect, this application provides a communication method. The method may be performed by a terminal device, or may be performed by a chip or a circuit. The method includes: receiving third information from a network device, and determining a start point of a first NCSG based on the third information. The third information is used for configuring the start point of the NCSG, and the third information includes an offset value relative to a reference time point and a first advance for the start point of the first NCSG relative to a first time point, where the first time point is a time point indicated by the offset value, and candidate values of the first advance include a value greater than 0.5.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

According to a tenth aspect, this application provides a communication method. The method may be performed by a network device, or may be performed by a chip or a circuit. The method includes: sending third information to a terminal device, and determining a start point of a first NCSG based on the third information. The third information is used for configuring the start point of the NCSG, and the third information includes an offset value relative to a reference time point and a first advance for the start point of the first NCSG relative to a first time point, where the first time point is a time point indicated by the offset value, and candidate values of the first advance include a value greater than 0.5.

In the foregoing method, the candidate values of the first advance are added, to more flexibly indicate the start point of the NCSG. This not only is compatible with a requirement of advancing the existing MG, but also helps alignment between the time start point of the effective measurement time of the NCSG and the time start point of the effective measurement time of the MG.

In a possible design, a quantity of the candidate values of the first advance is greater than 3. The candidate values of the first advance are added, so that the candidate values of the first advance may indicate a larger value, or a value with higher precision. This helps alignment between the time start point of the effective measurement time of the first NCSG and the time start point of the effective measurement time of the MG.

According to an eleventh aspect, this application further provides a communication apparatus, and the communication apparatus has functions of implementing any method according to the first aspect, the third aspect, the fifth aspect, the seventh aspect, or the ninth aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing corresponding functions of the terminal device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support communication between the communication apparatus and a device such as an access network device.

In a possible design, the communication apparatus includes corresponding functional modules, respectively configured to implement the steps in the foregoing method. The function may be implemented by hardware, or may be implemented by hardware executing corresponding software. The hardware or software includes one or more modules corresponding to the foregoing functions.

In a possible design, a structure of the communication apparatus includes a processing module and a communication module. The modules may perform corresponding functions in the foregoing method examples. For details, refer to descriptions in the method according to the first aspect, the third aspect, the fifth aspect, the seventh aspect, or the ninth aspect. Details are not described herein again.

According to a twelfth aspect, this application further provides a communication apparatus, and the communication apparatus has functions of implementing any method according to the second aspect, the fourth aspect, the sixth aspect, the eighth aspect, or the tenth aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing corresponding functions of the terminal device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support communication between the communication apparatus and a device such as an access network device.

In a possible design, the communication apparatus includes corresponding functional modules, respectively configured to implement the steps in the foregoing method. The function may be implemented by hardware, or may be implemented by hardware executing corresponding software. The hardware or software includes one or more modules corresponding to the foregoing functions. In a possible design, a structure of the communication apparatus includes a processing module and a communication module. The modules may perform corresponding functions in the foregoing method examples. For details, refer to descriptions in the method according to the second aspect, the fourth aspect, the sixth aspect, the eighth aspect, or the tenth aspect. Details are not described herein again.

According to a thirteenth aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method in the first aspect, the third aspect, the fifth aspect, the seventh aspect, or the ninth aspect, and any possible design by using a logic circuit or executing code instructions.

According to a fourteenth aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method in the second aspect, the fourth aspect, the sixth aspect, the eighth aspect, or the tenth aspect, and any possible design by using a logic circuit or executing code instructions.

According to a fifteenth aspect, a computer-readable storage medium is provided. The computer-readable storage medium stores a computer program or instructions. When the computer program or the instructions are executed by a processor, the method in any one of the first aspect to the tenth aspect and any possible design is implemented.

According to a sixteenth aspect, a computer program product storing instructions is provided. When the instructions are run by a processor, the method in any one of the first aspect to the tenth aspect and any possible design is implemented.

According to a seventeenth aspect, a chip system is provided. The chip system includes a processor, may further include a memory, and is configured to implement the method in any one of the first aspect to the tenth aspect and any possible design. The chip system may include a chip, or may include a chip and another discrete device.

According to an eighteenth aspect, a communication system is provided. The system includes the apparatus (for example, the terminal device) according to the first aspect and the apparatus (for example, the access network device) according to the second aspect. Alternatively, the system includes the apparatus (for example, the terminal device) according to the third aspect and the apparatus (for example, the access network device) according to the fourth aspect. Alternatively, the system includes the apparatus (for example, the terminal device) according to the fifth aspect and the apparatus (for example, the access network device) according to the sixth aspect. Alternatively, the system includes the apparatus (for example, the terminal device) according to the seventh aspect and the apparatus (for example, the access network device) according to the eighth aspect. Alternatively, the system includes the apparatus (for example, the terminal device) according to the ninth aspect and the apparatus (for example, the access network device) according to the tenth aspect.

### BRIEF DESCRIPTION OF DRAWINGS

FIG. 1 is a schematic diagram of an NCSG according to an embodiment of this application;
FIG. 2 is a schematic diagram of an architecture of a network system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic diagram of effective measurement time according to an embodiment of this application;
FIG. 6 is a schematic diagram of an offset value according to an embodiment of this application;
FIG. 7 is a schematic diagram of determining a start point of effective measurement time of an NCSG according to an embodiment of this application;
FIG. 8 is another schematic diagram of determining a start point of effective measurement time of an NCSG according to an embodiment of this application;
FIG. 9 is another schematic diagram of determining a start point of effective measurement time of an NCSG according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

### DESCRIPTION OF EMBODIMENTS

For ease of understanding embodiments of this application, the following first briefly describes the embodiments with reference to several terms in this application.

### (1) Radio frequency chain and radio frequency resource

A radio frequency chain and a radio frequency resource may be resources that a communication device receives or sends on a frequency or a frequency band. Based on implementation of the communication device, receiving or sending on a plurality of frequencies may be implemented by using one radio frequency chain, and receiving or sending on each frequency may alternatively be implemented by using an independent radio frequency chain.

### (2) MG

A network device configures, for a terminal device, a time window that periodically appears, and the terminal device may not receive or send a service of a serving cell within the time window. An MG is usually configured to enable user equipment (user equipment, UE) to measure a non-serving frequency. Considering that a serving frequency of the UE and the non-serving frequency share a same radio frequency chain, when the UE performs measurement on the non-serving frequency, a service on the serving frequency needs to be suspended.

### (3) NCSG

A network device configures, for a terminal device, a time window that periodically appears, and the time window includes three parts: a visible interruption length (visible interruption length, VIL) 1, a measurement length (measurement length, ML), and a VIL 2. The terminal device may not receive or send a service of a serving cell within time of the VIL 1 and the VIL 2 that are in the window, and UE normally receives and sends the service of the serving cell within the ML. The VIL 1 and the VIL 2 may be time that is configured by the network device for the terminal device and that is used for radio frequency adjustment.

An NCSG is usually configured to enable the UE to measure a non-serving frequency, and the serving frequency and the non-serving frequency have independent radio frequency chains, and these radio frequency chains may work simultaneously. It should be noted that the NCSG is merely an example for description, and another name may alternatively be used in future communication development. This is not specifically limited herein. (4) Measurement target

A measurement target may also be referred to as a measurement object. One measurement target corresponds to one frequency. A measurement parameter of the measurement target may include a reference signal and a measurement parameter (for example, a time domain position) corresponding to the reference signal.

(5) Terminal device: A terminal device includes a device that provides voice and/or data connectivity for a user. Specifically, the terminal device includes a device that provides voice for the user, includes a device that provides data connectivity for the user, or includes a device that provides voice and data connectivity for the user. For example, a handheld device with a wireless connection function or a processing device connected to a wireless modem may be included. The terminal device may communicate with a core network through a radio access network (radio access network, RAN), and exchange voice or data with the RAN, or exchange voice and data with the RAN. The terminal device may include UE, a wireless terminal device, a mobile terminal device, a device-to-device (device-to-device, D2D) communication terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, a radio frequency identification (radio frequency identification, RFID) device, a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

In embodiments of this application, the terminal device may further include a relay (relay). Alternatively, it can be understood that any device that can perform data communication with a base station may be considered as a terminal device.

In embodiments of this application, an apparatus configured to implement functions of the terminal device may be a terminal device, or may be an apparatus that is used in a terminal device and that can support the terminal device in implementing the functions, for example, a component or an assembly with a communication function, or a chip system. The apparatus may be mounted in the terminal device. In embodiments of this application, the chip system may include a chip, or may include a chip and another discrete device. In the technical solutions provided in embodiments of this application, an example in which the apparatus configured to implement the functions of the terminal device is a terminal device is used to describe the technical solutions provided in embodiments of this application.

(6) Network device. For example, a network device includes an access network (access network, AN) device, for example, a base station (for example, an access point), and may be a device that communicates with a terminal device over an air interface in an access network by using one or more cells. The network device may include an evolved NodeB (NodeB, eNB, or e-NodeB, evolved NodeB) in an LTE system or a long term evolution-advanced (long term evolution-advanced, LTE-A) system, or may include a next generation NodeB (next generation NodeB, gNB) in a 5th generation (5th generation, 5G) mobile communication technology NR system (also briefly referred to as an NR system), or may include a central unit (central unit, CU) and a distributed unit (distributed unit, DU) in a cloud radio access network (cloud radio access network, Cloud RAN) system. This is not limited in embodiments of this application. For example, the network device may be the CU or the DU in the cloud RAN system, or a device including the CU and the DU.

The network device may further include a core network device, and the core network device includes, for example, an access and mobility management function (access and mobility management function, AMF). Because embodiments of this application mainly relate to an access network, the network device is the access network device in the following descriptions unless otherwise specified.

In embodiments of this application, an apparatus configured to implement functions of the network device may be a network device, or may be an apparatus that can support a network device in implementing the functions, for example, a chip system. The apparatus may be mounted in the network device. In the technical solutions provided in embodiments of this application, an example in which the apparatus configured to implement functions of the network device is a network device is used to describe the technical solutions provided in embodiments of this application.

In embodiments of this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance degrees, or the like of the plurality of objects. For example, a first parameter and a second parameter are merely used to distinguish between different parameters, but do not indicate different content, values, priorities, importance degrees, or the like of the two parameters.

The foregoing describes some noun concepts used in embodiments of this application. The following describes technical features of embodiments of this application.

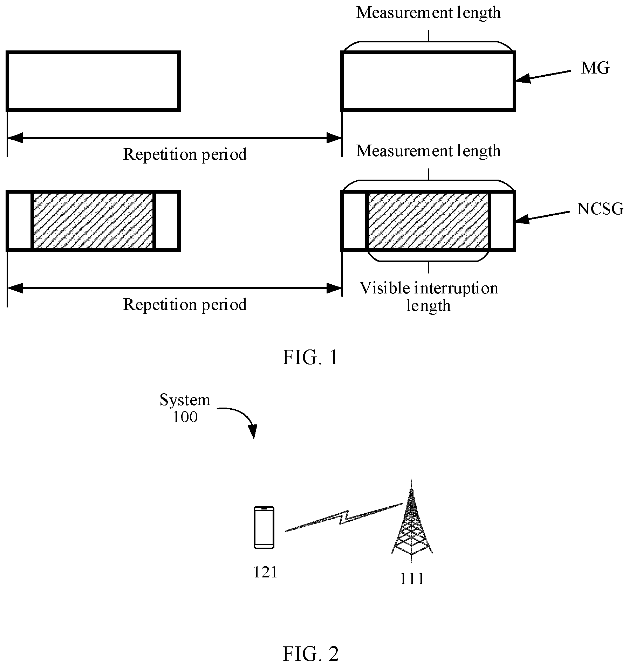

To measure a reference signal on an MO, a terminal device needs to switch a radio frequency chain from a serving cell to a target frequency, and therefore, generates a data interrupt in the serving cell. However, in some radio frequency architectures, when measuring a target frequency (or an MO), the terminal device may use an additional radio frequency chain, and does not need to switch the radio frequency chain from the serving cell to the target frequency, thereby avoiding the data interrupt generated in the serving cell within entire measurement time. However, when the additional radio frequency chain is used for the measurement, switching or adjustment of the additional radio frequency chain before and after the measurement may cause the interrupt generated in the serving cell. To reduce impact of the MG on data throughput and standardize a length and a position of the interrupt, an NCSG is proposed in an MG enhancement project in the 3GPP R17 protocol. As shown in FIG. 1, the NCSG is determined by a VIL, an ML, and a repetition period (visible interruption repetition period, VIRP).

Whether the terminal device may use an additional radio frequency chain to measure a target frequency (or an MO) depends on a measurement capability of the terminal device, and the network device determines, based on reporting of the measurement capability of the terminal device, whether an MG, an NCSG, or neither an MG nor an NCSG needs to be configured for the terminal device. Currently, a NeedForGap information element is defined in NR. The terminal device may report the measurement capability to the network device by using NeedForGap. The terminal device may report a gap state or a no-gap state by using the NeedForGap information element, where the gap state indicates that the network device needs to configure the MG to complete the currently configured measurement, and the no-gap state indicates that the network device does not need to configure the MG to complete the currently configured measurement. Currently, in standard discussion, there is no conclusion on whether an interrupt (for example, an interrupt caused by switching or adjustment of the additional radio frequency chain) is generated in a measurement process when the terminal device reports the no-gap state. As a result, the network device cannot determine whether the interrupt is generated when the terminal device reports the no-gap state.

For this problem, a possible solution is to extend the NeedForGap and add an 'ncsg' state. The state indicates that the interrupt is generated, in other words, the NCSG needs to be configured. Alternatively, no-gap of the NeedForGap is understood as ncsg (that is, the interrupt is needed, in other words, the NCSG needs to be configured). Alternatively, new NeedForGapsInfoNR-r17 signaling is added without changing the current NeedForGap and an understanding thereof, and the NeedForGapsInfoNR-r17 signaling indicates whether the interrupt is generated (in other words, whether the NCSG needs to be configured).

In the foregoing solution, because the no-gap is newly defined or the new signaling is added, a backward compatibility problem exists. For example, for a target frequency on which the interrupt needs to be generated, the terminal device may report the no-gap by using the NeedForGap signaling. When the terminal device reports, by using new signaling, that the interrupt is needed during measurement, the terminal device expects the network device to configure the NCSG or the MG to perform measurement. However, the network device may not read the signaling indicating whether the terminal device needs to generate the interrupt. In this case, the network device expects the terminal device to perform measurement with no MG or no NCSG, and therefore, does not configure the NCSG or the MG. Consequently, the terminal device and the network device have inconsistent understandings. As a result, the terminal device cannot correctly perform measurement.

Based on this, embodiments of this application provide a communication method and apparatus, to resolve a problem that a terminal device and a network device have inconsistent understandings of how the terminal device performs measurement. The method and the apparatus are based on a same inventive concept. Because the method and the apparatus have a similar problem-resolving principle, for implementations of the apparatus and the method, refer to each other. No repeated description is provided.

The communication method provided in this application may be applied to various communication systems, for example, internet of things (internet of things, IoT), narrow band internet of things (narrow band internet of things, NB-IoT), long term evolution (long term evolution, LTE), a 5th generation (5G) communication system, an LTE and 5G hybrid architecture, a 5G new radio (new radio, NR) system, and a 6G system or a new communication system emerging in future communication development. The communication system in this application may alternatively be a machine-to-machine (machine-to-machine, M2M) network or another network.

FIG. 2 shows a communication system according to an embodiment of this application. The communication system 100 may include at least one network device such as a network device 111 shown in FIG. 2, and the communication system 100 may further include at least one terminal device such as a terminal device 121 shown in FIG. 2.

A network architecture and a service scenario described in embodiments of this application are intended to describe the technical solutions in embodiments of this application more clearly, and do not constitute a limitation on the technical solutions provided in embodiments of this application. Persons of ordinary skill in the art may know that, with evolution of the network architecture and emergence of a new service scenario, the technical solutions provided in embodiments of this application are also applicable to a similar technical problem.

It should be noted that in embodiments of this application, that measurement capability information corresponds to a first measurement target is merely used as an example for description, but this is not limited to the measurement target. In a specific embodiment, alternatively, the measurement capability information may correspond to a frequency band combination (for example, a current frequency band combination of the terminal device), may correspond to a target frequency, may correspond to a cell (for example, a serving cell), or may correspond to at least two of a measurement target, a frequency band combination, a target frequency, and a cell. The measurement capability information may be capability information of the terminal device in a current frequency band combination, may be capability information for measuring a target frequency, may be capability information for a serving cell, or may be a combination of these.

In embodiments of this application, "in a case in which..." may also be described as "assuming that...", "if", "when", or the like. For example, "in a case in which a state of a first information element is a first state" may also be described as "assuming that a state of a first information element is a first state", or "if a state of a first information element is a first state", or "when a state of a first information element is a first state".

The following describes the technical solutions in embodiments of this application with reference to the accompanying drawings in embodiments of this application.

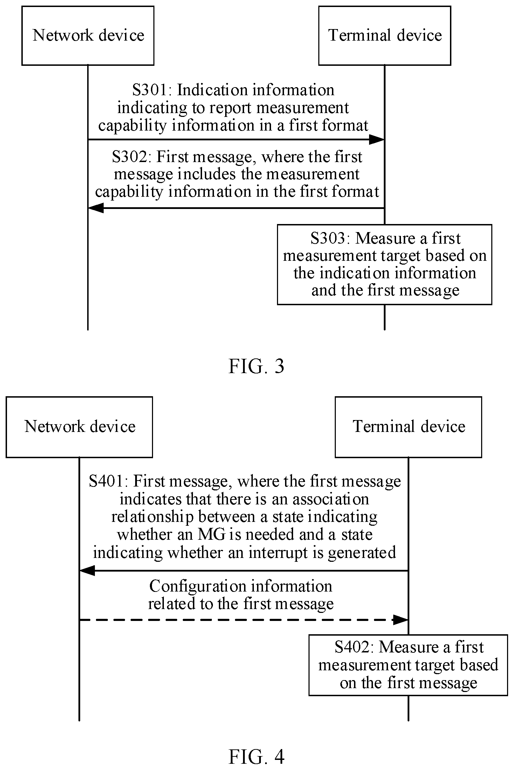

FIG. 3 is a schematic flowchart of a communication method according to an embodiment of this application.

S301: A network device sends indication information to a terminal device. Correspondingly, the terminal device receives the indication information from the network device.

The indication information indicates to report measurement capability information in a first format, and the measurement capability information in the first format includes information about whether an interrupt is generated during measurement. The measurement capability information in the first format may have a plurality of implementations. The following describes the implementations with reference to Implementation 1 and Implementation 2.

Implementation 1: The measurement capability information in the first format may be indicated by using two information elements. For example, the measurement capability information in the first format may be indicated by using a first information element and a second information element. The first information element may indicate whether the interrupt is generated when a first measurement target is measured. The first information element may report one of the following two states: a first state indicating that the interrupt is generated, or a second state indicating that no interrupt is generated.

The second information element may indicate whether an MG is needed when the first measurement target is measured, and a state of the second information element is one of the following two states: a third state indicating that the MG is needed, or a fourth state indicating that no MG is needed. For example, the second information element may be a NeedForGap information element, the third state may be a gap state of the NeedForGap information element, and the fourth state may be a no-gap state of the NeedForGap information element.

Implementation 2: The measurement capability information in the first format may alternatively be indicated by using one information element. For example, the measurement capability information in the first format may be indicated by using a third information element. The third information element may report one of the following three states: a fifth state indicating that an MG is needed, a sixth state indicating that no MG is needed and no interrupt is generated, or a seventh state indicating that no MG is needed and the interrupt is generated. In this implementation, in a case in which the network device indicates the terminal device to report the measurement capability information in the first format, regardless of whether the network device configures the terminal device to report a NeedForGap information element, the terminal device may no longer report the NeedForGap information element. Alternatively, the terminal device does not expect the network device to send the indication information to the terminal device and to configure the terminal device to report a NeedForGap information element.

It may be understood that the indication information indicates to report the measurement capability information in the first format, or it may be described as that the indication information is used to query or request the measurement capability information in the first format, or it may be described as that the indication information indicates to send or report the measurement capability information in the first format, or the like. Provided that the indication information may trigger the terminal device to send the measurement capability information in the first format, the indication information may be considered as the indication information in embodiments of this application. In some embodiments, alternatively, the network device may not indicate the terminal device to report the measurement capability information in the first format. Correspondingly, the terminal device may not report whether the interrupt is generated during the measurement. In this case, if the network device indicates the terminal device to report the NeedForGap information element, the terminal device reports the NeedForGap information element, and determines a measurement manner based on the reported NeedForGap information element.

Optionally, the network device sends a media access control control element (media access control control element, MAC CE) or a radio resource control (radio resource control, RRC) message to the terminal device, where the MAC CE or the RRC message carries the indication information.

It should be noted that, that the network device indicates to report the measurement capability information in the first format may also be understood as that the network device indicates to report whether the interrupt is generated during the measurement; or may also be understood as that the network device indicates to report the first information element or the third information element. That the network device indicates not to report the measurement capability information in the first format or not to report measurement capability information in a second format may also be understood as that the network device indicates not to report whether the interrupt is generated during the measurement; or may also be understood that the network device indicates not to report the first information element or the third information element.

S302: The terminal device sends a first message to the network device. Correspondingly, the network device receives the first message from the terminal device.

The first message includes the measurement capability information in the first format, and the measurement capability information indicates whether the MG is needed and whether the interrupt is generated when the terminal device measures the first measurement target. In Implementation 1, the first message may include the first information element and the second information element. In Implementation 2, the first message may include the third information element.

Optionally, the first message is the MAC CE or the RRC message. S303: The terminal device measures the first measurement target based on the indication information and the first message. A specific process in which the terminal device measures the first measurement target is described in detail below.

In a possible implementation, the terminal device may measure the first measurement target based on configuration information sent by the network device. The configuration information may be sent by the network device after the network device receives the first message, the configuration information is related to the indication information, and the configuration information is related to the first message. That the configuration information is related to the indication information, and the configuration information is related to the first message may be understood as that content of the configuration information is related to whether the indication information is sent, and the content of the configuration information is related to content of the first message. For example, the configuration information includes first configuration information for configuring an NCSG for the first measurement target, or includes second configuration information for configuring the MG for the first measurement target, or includes neither the first configuration information nor the second configuration information. This depends on whether to indicate to report the measurement capability information in the first format and content of the measurement capability information carried in the first message. The configuration information is also described in the following descriptions of a process in which the terminal device measures the first measurement target.

In this embodiment of this application, the terminal device may determine different measurement manners based on the indication information. Assuming that the terminal device generates the interrupt in a measurement process, if the network device indicates the terminal device to report the measurement capability information in the first format, the terminal device expects the network device to process the interrupt by configuring the MG or the NCSG, and performs measurement based on the MG or the NCSG; or if the network device does not indicate the terminal device to report the measurement capability information in the first format, the terminal device does not expect the network device to configure the NCSG to process the interrupt, and a measurement manner of the terminal device and whether the network device configures the MG depend on whether the terminal device reports NeedForGap signaling and a reported value of NeedForGap. Based on the indication information from the network device, the network device and the terminal device have consistent understandings of how the terminal device performs measurement.

The following describes, with reference to the two implementations of the measurement capability information in the first format, a process in which the network device sends the configuration information and the terminal device measures the first measurement target.

Based on the foregoing descriptions, the network device may indicate the terminal device to report the measurement capability information in the first format, that is, sends the indication information to the terminal device. Alternatively, the network device may not indicate the terminal device to report the measurement capability information in the first format, that is, does not send the indication information to the terminal device.

In an implementation in which the network device indicates the terminal device to report the measurement capability information in the first format, the measurement capability information reported by the terminal device may be described below in three cases with reference to Case A1 to Case A3.

Case A1: The measurement capability information reported by the terminal device indicates that the interrupt is generated when the first measurement target is measured. In this case, the state of the first information element that is included in the first message is the first state, or the state of the third information element that is included in the first message is the seventh state.

In this case, the configuration information sent by the network device is related to a first capability of the terminal device, and the first capability is that the NCSG is supported or not supported. For example, assuming that the first capability of the terminal device is that the NCSG is supported, the configuration information may include MG configuration information or NCSG configuration information. Assuming that the first capability of the terminal device is that the NCSG is not supported, the configuration information may include MG configuration information. The MG configuration information is used for configuring the MG for the first measurement target, and the NCSG configuration information is used for configuring the NCSG for the first measurement target.

Correspondingly, in this case, the terminal device may determine measurement behavior for the first measurement target based on the first capability. For example, assuming that the first capability of the terminal device is that the NCSG is supported, the terminal device may perform measurement based on a first NCSG or perform measurement based on a first MG, that is, the terminal device may measure the first measurement target within the first NCSG or the first MG. Assuming that the first capability of the terminal device is that the NCSG is not supported, the terminal device may perform measurement based on a first MG, that is, the terminal device may measure the first measurement target within the first MG. The first NCSG may be an NCSG configured by the network device for the first measurement target. For example, the first NCSG may be configured in the NCSG configuration information. The first MG may be an MG configured by the network device for the first measurement target. For example, the first MG may be configured in the MG configuration information.

Alternatively, in this case, it may also be considered by default that the terminal device supports the NCSG. Therefore, in the foregoing case, the terminal device may measure the first measurement target within the first MG or the first NCSG. In this manner, the terminal device reports that the interrupt is generated in a case in which the terminal device supports the NCSG, or the terminal device does not report that the interrupt is generated in a case in which the terminal device does not support the NCSG. In this manner, the terminal device may not need to additionally report the first capability, and correspondingly, the network device may not need to read the first capability. Therefore, signaling overheads can be reduced, and complexity of the terminal device and the network device can be reduced.

Case A2: The measurement capability information reported by the terminal device indicates that the interrupt is generated when the first measurement target is measured. In this case, the state of the first information element that is included in the first message is the second state and the state of the second information element is the third state, or the state of the third information element that is included in the first message is the fifth state.

In this case, the configuration information sent by the network device may include MG configuration information. Correspondingly, in this case, the terminal device may perform measurement based on a first MG, that is, the terminal device may measure the first measurement target within the first MG.

Case A3: The measurement capability information reported by the terminal device indicates that the interrupt is generated when the first measurement target is measured. In this case, the state of the first information element that is included in the first message is the second state and the state of the second information element is the fourth state, or the state of the third information element that is included in the first message is the sixth state.

In this case, the configuration information sent by the network device may not include MG configuration information and NCSG configuration information, that is, the network device does not configure the MG and the NCSG for the first measurement target.

Correspondingly, in this case, the terminal device may perform measurement based on no MG and no NCSG. Alternatively, assuming that the network device configures MGs or NCSGs for other measurement targets, the terminal device may perform measurement outside these MGs or the NCSGs.

In an implementation in which the network device does not indicate the terminal device to report the measurement capability information in the first format, if the network device indicates the terminal device to report the NeedForGap information element, the measurement capability reported by the terminal device may be described below in two cases with reference to Case B1 and Case B2.

Case B 1: The measurement capability information reported by the terminal device indicates that the MG is needed when the first measurement target is measured. In this case, a state of the NeedForGap information element is the third state.

In this case, the configuration information sent by the network device may include MG configuration information. Correspondingly, in this case, the terminal device may perform measurement based on a first MG, that is, the terminal device may measure the first measurement target within the first MG.

Case B2: The measurement capability information reported by the terminal device indicates that no MG is needed when the first measurement target is measured. In this case, a state of the NeedForGap information element is the fourth state.

In this case, the configuration information sent by the network device may not include MG configuration information and NCSG configuration information, that is, the network device does not configure the MG and the NCSG for the first measurement target. Correspondingly, in this case, the terminal device may perform measurement based on no MG and no NCSG. Alternatively, assuming that the network device configures MGs/NCSGs for other measurement targets, the terminal device may perform measurement outside these MGs or NCSGs.

In the foregoing manner, the network device and the terminal device determine different measurement manners based on the indication information. When the network device does not indicate the terminal device to report the measurement capability information in the first format, understandings of the second information element (or the NeedForGap information element) by the terminal device and the network device may not need to be limited, and measurement is performed based on the second information element (that is, the NeedForGap information element). Assuming that the network device does not indicate the terminal device to report the measurement capability information in the first format, even if the terminal device generates the interrupt in a measurement process, the terminal device does not report whether the interrupt is generated during the measurement. In this way, in a case in which the network device does not support the NCSG, the terminal device and the network device can have consistent understandings of configuring the interrupt.

In this embodiment of this application, the network device and the terminal device may determine the different measurement manners based on the indication information. In this manner, measurement behavior in different states of the measurement capability information can be clearly determined, so that the terminal device and the network device can have consistent understandings of the measurement behavior of the terminal device.

In this manner, when the network device does not indicate the terminal device to report the measurement capability information in the first format, the terminal device and the network device may not need to change the understandings of the second information element, and measurement is performed based on the second information element. Herein, the second information element may be the NeedForGap information element.

In addition, measurement behavior in each state of the measurement capability information is defined. This can avoid measurement behavior inconsistency between the network device and the terminal device, and improve data transmission reliability.

FIG. 4 is a schematic flowchart of another communication method according to an embodiment of this application.

S401: A terminal device sends a first message to a network device. Correspondingly, the network device receives the first message from the terminal device.

The first message indicates measurement capability information of the terminal device, the measurement capability information indicates whether an MG is needed and whether an interrupt is generated when a first measurement target is measured, and indicates that there is an association relationship between a state indicating whether the MG is needed and a state indicating whether the interrupt is generated.

It should be understood that in this embodiment of this application, that two states are associated with each other and that there is the association relationship between the two states may be understood as that the two states are simultaneously reported. For example, that a second state is associated with a fourth state may be understood as that the second state and the fourth state are simultaneously reported.

In a first implementation, the first message may include a first information element and a second information element. The first information element may indicate whether the MG is needed when the first measurement target is measured, and the first information element may report one of the following two states: a first state indicating that the MG is needed or the second state indicating that no MG is needed. For example, the first information element may be a NeedForGap information element, the first state may be a gap state of the NeedForGap information element, and the second state may be a no-gap state of the NeedForGap information element.

The second information element may indicate whether the interrupt is generated when the first measurement target is measured, and a state of the second information element is one of the following two states: a third state indicating that the interrupt is generated or the fourth state indicating that no interrupt is generated.

In the foregoing implementation, the first information element and the second information element may meet at least one of the following association relationships: the second state is associated with the fourth state; and the first state is associated with the third state or the fourth state.

It should be understood that, that the second state is associated with the fourth state may be understood as that when a state of the first information element is the second state, the state of the second information element is the fourth state, that is, when the state of the first information element is the second state, the terminal device may not report that the interrupt is generated, where the second state may be understood as that no MG is needed.

That the first state is associated with the third state or the fourth state may be understood as that when the state of the first information element is the first state, the third state indicating that the interrupt is generated is reported; or when the state of the first information element is the first state, the second information element may report the third state, or may report the fourth state, that is, when the state of the first information element is the first state, the terminal device may report that the interrupt is generated, or may report that no interrupt is generated. When the state of the first information element is the first state, the state of the second information element may depend on implementation of the terminal device. That the first state is associated with the third state or the fourth state may also be understood as that when the state of the second information element is the third state, the state of the first information element is the first state, and the first state may be understood as that the MG is needed.

In the foregoing design, a relationship between the state of the first information element and the state of the second information element is restricted, so that when the state of the first information element is the first state, the terminal device reports that the interrupt is generated, in other words, when the state of the first information element is the second state, the terminal device may not report that the interrupt is generated. When the state of the first information element in the measurement capability information is the second state, regardless of whether the terminal device and the network device support an NCSG, understandings of the measurement capability information by the terminal device and the network device may be determined as that no interrupt is generated. This can avoid inconsistent understandings of the state of the first information element by the terminal device and the network device.

When the state of the first information element in the measurement capability information is the second state, the terminal device does not expect the network device to configure the MG or the NCSG and performs measurement outside the MG or the NCSG. When the state of the first information element in the measurement capability information is the first state, the terminal device determines a measurement manner based on a reported value of the second information element, where the reported value of the second information element may be the third state or the fourth state. In the foregoing manner, the network device and the terminal device have consistent understandings of how the terminal device performs measurement, and there is no case in which the network device cannot determine whether the terminal device generates the interrupt.

In a second implementation, the first message may include a first information element and a third information element. The first information element is the same as the first information element in the first implementation. Details are not described herein again. The third information element may report one of the following three states: a fifth state indicating that the MG is needed, a sixth state indicating that no MG is needed and no interrupt is generated, or a seventh state indicating that no MG is needed and the interrupt is generated.

In the foregoing implementation, the first information element and the third information element may meet at least one of the following association relationships: a first state is associated with the fifth state or the seventh state; and the second state is associated with the sixth state.

It should be understood that, that a first state is associated with the fifth state or the seventh state may be understood as that when a state of the first information element is the first state, the seventh state indicating that the interrupt is generated is reported; or when a state of the first information element is the first state (indicating that the MG is needed), the third information element may report the fifth state, or may report the seventh state, that is, when the state of the first information element is the first state, the terminal device may report that the interrupt is generated. Specifically, whether the terminal device generates a large interrupt (that is, the MG) or a small interrupt (that is, the NCSG) may be indicated by using the fifth state or the seventh state of the third information element, and whether the terminal device generates the large interrupt or the small interrupt depends on implementation of the terminal device. This is not limited in this application. That a first state is associated with the fifth state or the seventh state may also be understood as that when the state of the third information element is the seventh state, the state of the first information element is the first state.

That the second state is associated with the sixth state may be understood as that there is a constraint relationship between the second state and the sixth state. For example, when the state of the first information element is the second state, the second information element reports the sixth state. In other words, when the first information element reports the second state, that is, reports that no MG is needed, the terminal device reports, based on a case in which the state of the second information element is the sixth state, that no interrupt is generated.

In the foregoing implementation, a relationship between the state of the first information element and the state of the third information element is restricted, so that when the terminal device reports that no MG is needed (that is, the state of the first information element is the second state), the state of the third information element is the sixth state, that is, the third information element can only report that no interrupt is generated, in other words, when the state of the first information element is the second state, the terminal device may not report that the interrupt is generated. When the state of the first information element in the measurement capability information is the second state, the terminal device does not expect the network device to configure the MG or the NCSG and performs measurement outside the MG or the NCSG. When the state of the first information element in the measurement capability information is the first state, the terminal device determines a measurement manner based on a reported value (the fifth state or the seventh state) of the second information element. In the foregoing manner, the network device and the terminal device may have consistent understandings of how the terminal device performs measurement. This can avoid a case in which the terminal device cannot perform measurement or generates an additional interrupt during the measurement due to the inconsistent understandings, thereby reducing a data packet loss.

S402: The terminal device measures the first measurement target based on the first message.

There are a plurality of implementations in which the terminal device measures the first measurement target based on the first message. In a possible implementation, the terminal device may measure the first measurement target based on configuration information sent by the network device. The configuration information may be sent by the network device after the network device receives the first message, and the configuration information is related to the first message. The configuration information is also described in the following descriptions of a process in which the terminal device measures the first measurement target.

In this embodiment of this application, the state of the first information element and the state of the second information element (or the third information element) are restricted, regardless of whether the terminal device and the network device support the NCSG, so that the network device and the terminal device have same understandings of the state of the first information element (or the second information element or the third information element), and therefore, the network device and the terminal device may have the consistent understandings of the reported measurement capability information.

The following describes, with reference to the two implementations of the measurement capability information, a process in which the network device sends the configuration information and the terminal device measures the first measurement target. As described in S303, there may be three cases of the measurement capability information reported by the terminal device.

Case 1: The measurement capability information reported by the terminal device indicates that the interrupt is generated when the first measurement target is measured. In this case, the state of the second information element that is included in the first message is the third state, or the state of the third information element that is included in the first message is the seventh state. It may be understood that in this case, the state of the first information element that is included in the first message is the first state.

In this case, for processing manners of the terminal device and the network device, refer to processing manners of the terminal device and the network device in Case A1 in the communication method in FIG. 3. No repeated description is provided.

Case 2: The measurement capability information reported by the terminal device indicates that no interrupt is generated and the MG is needed when the first measurement target is measured. In this case, the state of the second information element that is included in the first message is the fourth state, or the state of the third information element that is included in the first message is the fifth state. It may be understood that in this case, the state of the first information element that is included in the first message is the first state.

In this case, for processing manners of the terminal device and the network device, refer to processing manners of the terminal device and the network device in Case A2 in the communication method in FIG. 3. No repeated description is provided.

Case 3: The measurement capability information reported by the terminal device indicates that no interrupt is generated and no MG is needed when the first measurement target is measured. In this case, the state of the second information element that is included in the first message is the fourth state, or the state of the third information element that is included in the first message is the sixth state. It may be understood that in this case, the state of the first information element that is included in the first message is the second state.

In this case, for processing manners of the terminal device and the network device, refer to processing manners of the terminal device and the network device in Case A3 in the communication method in FIG. 3. No repeated description is provided.

In the foregoing manner, the state of the first information element and the state of the second information element (or the third information element) are restricted, to implicitly indicate understandings of the first information element (namely, the NeedForGap information element) by the network device and the terminal device. Therefore, regardless of whether the terminal device and the network device support the NCSG, the network device and the terminal device have the same understandings of the state of the first information element (or the second information element or the third information element), so that the network device and the terminal device may have the consistent understandings of the reported measurement capability information.

In addition, measurement behavior in each state of the measurement capability information is defined. This can avoid measurement behavior inconsistency between the network device and the terminal device, and improve data transmission reliability.

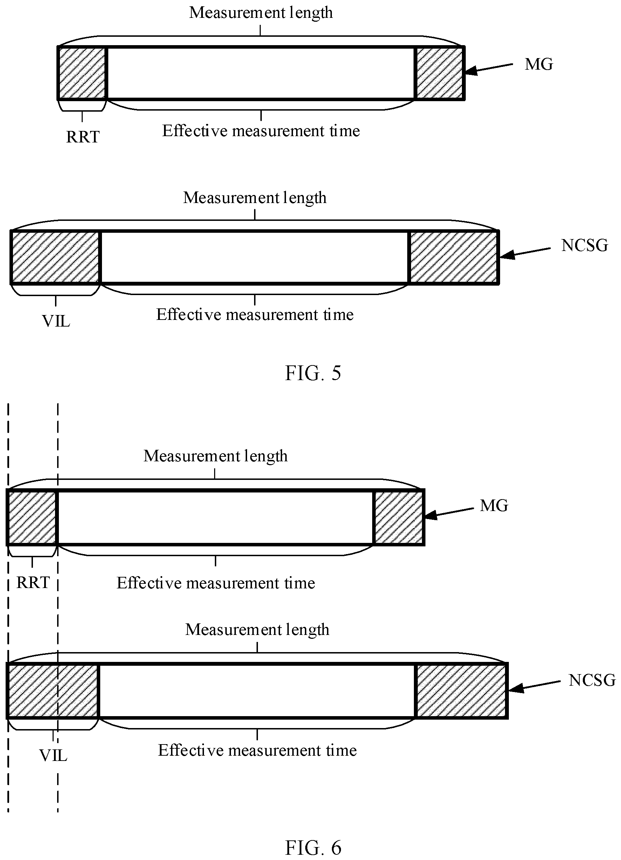

The foregoing describes two communication methods. In the two communication methods, the network device may send the MG configuration information or the NCSG configuration information to the terminal device, and the terminal device may measure the first measurement target based on the MG configuration information or the NCSG configuration information. Currently, the network device configures the MG based on a synchronization signal/physical broadcast channel block (synchronization signal and PBCH block, SSB)-based measurement timing configuration (SSB-based measurement timing configuration, SMTC) window of a measurement target (for example, the first measurement target), so that effective measurement time of the MG may include the SMTC window of the measurement target (for example, the first measurement target). When the network device configures the NCSG, effective measurement time of the NCSG also needs to include the SMTC window of the measurement target (for example, the first measurement target). One solution is to make an absolute time position of the effective measurement time of the NCSG the same as that of the effective measurement time of the MG. As shown in FIG. 5, the effective measurement time of the NCSG may include the SMTC window of the measurement target (for example, the first measurement target).

Currently, the network device may configure an offset for the MG and the NCSG based on a reference time point (for example, a system frame number 0 (system frame number 0, SFN0)), so that the terminal device may determine time start points of the MG and the NCSG based on the configured offset. The MG includes two RRTs and the effective measurement time, where the two RRTs are respectively located at two ends of the effective measurement time and is connected to the effective measurement time. The NCSG includes two VII,s and the effective measurement time, where the two VII,s are respectively located at two ends of the effective measurement time, and are connected to the effective measurement time. The terminal device needs to determine a start point of the effective measurement time of the MG based on the time start point of the MG and duration of the RRT, and determine a start point of the effective measurement time of the NCSG based on the start point of the NCSG and duration of the VIL. As shown in FIG. 6, when the VIL is greater than the RRT, if the same offset is configured for the NCSG and the MG, the start point of the effective measurement time of the NCSG is different from that of the effective measurement time of the MG.

Based on this, embodiments of this application provide three methods. According to the methods, the start point of the effective measurement time of the NCSG may be aligned with the time start point of the effective measurement time of the MG. It should be noted that the following three methods may be implemented with reference to any one of the foregoing communication methods, or may be independently implemented without depending on the foregoing two communication methods.

Method 1: The network device sends NCSG configuration information to the terminal device, where the NCSG configuration information may include first information, and the first information is used for configuring a start point of a first NCSG. The terminal device (or the network device) may apply a default first advance X based on the start point configured by the first information. In other words, the terminal device (or the network device) may determine the start point of the first NCSG based on the start point indicated by the first information and the first advance X.

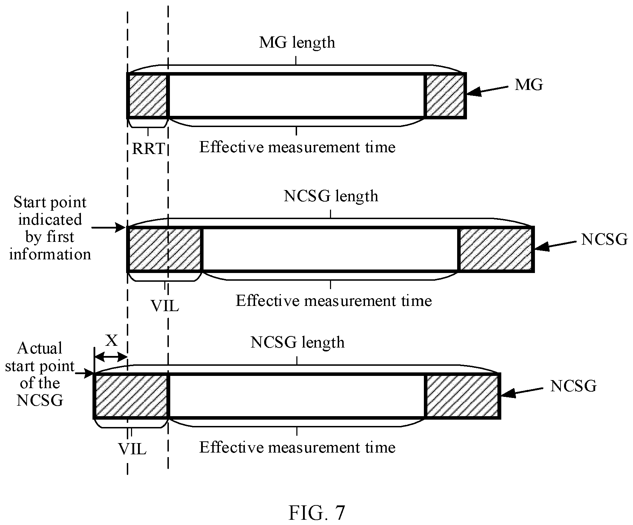

For example, as shown in FIG. 7, X = VIL - RRT, where the VIL may be a fixed value, or may be a value reported by the terminal device; and the RRT may be a fixed value.

The first advance X may be a positive number or a negative number. This is not specifically limited herein.

In the foregoing method, the time start point of the effective measurement time of the NCSG may be aligned with the time start point of the effective measurement time of the MG by using the default advance, and the terminal device may determine the start points of the MG and the NCSG based on the first information, so that the terminal device can support dynamic switching between the MG and the NCSG, and signaling overheads caused by a reconfiguration can be reduced. Method 2: The network device sends NCSG configuration information to the terminal device, where the NCSG configuration information may include second information, the second information includes an offset value relative to the reference time point (for example, the SFN 0), a first advance x1 relative to a first time point, and a second advance x2 relative to a second time point, the first time point is a time point indicated by the offset value, and the second time point is a time point indicated by the first advance. The terminal device (or the network device) may determine a start point of a first NCSG based on the offset value, the first advance, and the second advance.

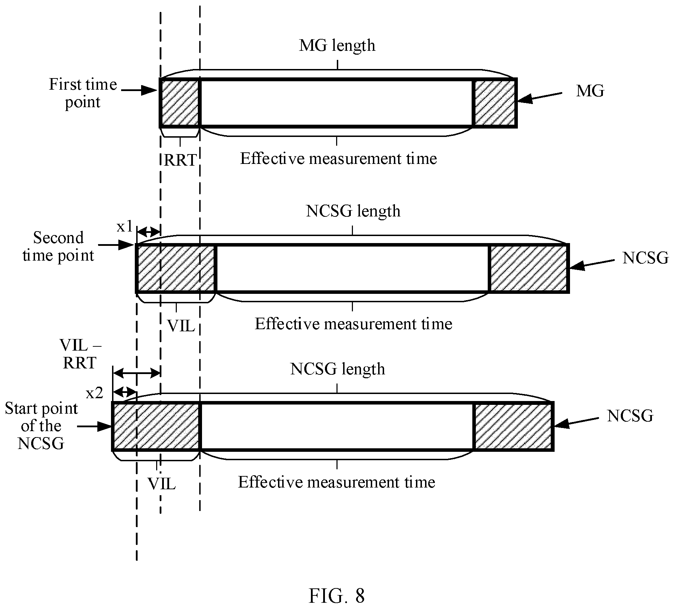

In an implementation, as shown in FIG. 8, x1 + x2 = VIL - RRT, where the VIL may be a fixed value, or may be a value reported by the terminal device; and the RRT may be a fixed value.

The first advance x1 may be a positive number or a negative number, and the second advance x2 may be a positive number or a negative number. This is not specifically limited herein.

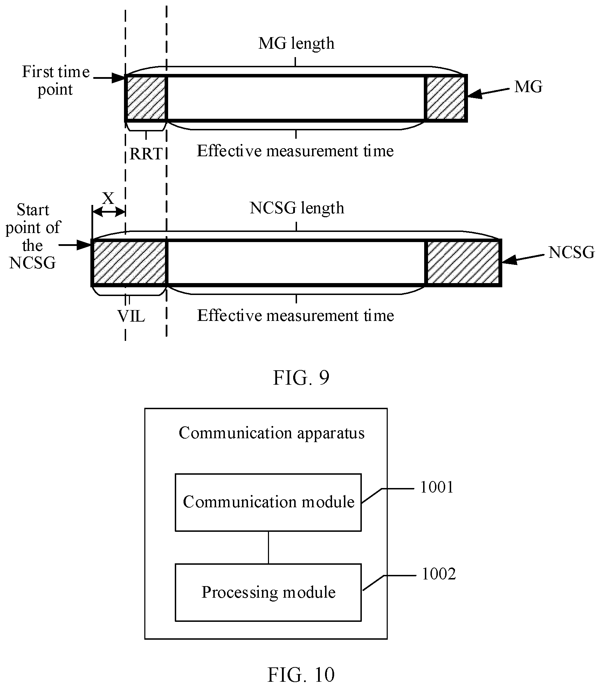

In the foregoing method, an advance is added, to more flexibly indicate the start point of the NCSG, so that the time start point of the effective measurement time of the NCSG may be aligned with the time start point of the effective measurement time of the MG by using the timing advance. The second advance is used only for the NCSG. That is, when the NCSG switches to the MG, the start point of the MG is the second time point determined based on the first time point and the advance relative to the first time point, so that the terminal device can support dynamic switching between the MG and the NCSG, and signaling overheads caused by a reconfiguration can be reduced. Method 3: The network device sends NCSG configuration information to the terminal device, where the NCSG configuration information may include third information, the third information includes an offset value relative to the reference time point (for example, the SFN 0) and an advance X relative to a first time point, and the first time point is a time point indicated by the offset value. The terminal device (or the network device) may determine a start point of a first NCSG based on the offset value and the advance that are included in the configuration information. For example, as shown in FIG. 9, X = VIL - RRT, where the VIL may be a fixed value, or may be a value reported by the terminal device; and the RRT may be a fixed value.

Currently, candidate values of the advance supported in the protocol include 0.25 ms and 0.5 ms. In this method, the candidate values of the advance may include values greater than 0.5 ms. For example, the candidate values of the advance may include 0.625 ms, 0.75 ms, 1 ms, 1.25 ms, 1.5 ms, and the like. The candidate values of the advance may alternatively include a value less than 0.25 ms, a value between 0.25 ms and 0.5 ms, and the like. For example, the candidate values of the advance may further include 0.125, 0.3, 0.375, 0.21 ms, and the like, which are not listed one by one herein.

It should be noted that the reference time point in the foregoing three methods may be preset in the protocol or configured by the network device. This is not limited in this application.

In the foregoing method, the candidate values of the advance are added, to more flexibly indicate the start point of the NCSG, so that the time start point of the effective measurement time of the NCSG may be aligned with the time start point of the effective measurement time of the MG by using the advance.

Based on a same inventive concept as the method embodiments, an embodiment of this application provides a communication apparatus. A structure of the communication apparatus may be shown in FIG. 10. The communication apparatus includes a communication module 1001 and a processing module 1002.

In an implementation, the communication apparatus may be specifically configured to implement the method performed by the terminal device in the embodiment shown in FIG. 3. The apparatus may be the terminal device, or may be a chip or a chipset in the terminal device, or a part of a chip that is configured to perform a related method function. The communication module 1001 is configured to: receive indication information from a network device, where the indication information indicates to report measurement capability information in a first format, and the measurement capability information in the first format includes information about whether an interrupt is generated during measurement; and send a first message to the network device, where the first message carries the measurement capability information of the terminal device, and the measurement capability information indicates whether a measurement gap MG is needed and whether the interrupt is generated when a first measurement target is measured. The processing module 1002 is configured to measure the first measurement target based on the indication information and the first message.

For example, the first message includes a first information element and a second information element, where a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed. Alternatively, the first message includes a third information element, where a state of the third information element is one of the following three states: a fifth state indicating that the MG is needed, a sixth state indicating that no MG is needed and no interrupt is generated, or a seventh state indicating that no MG is needed and the interrupt is generated.

Optionally, the processing module 1002 is specifically configured to: in a case in which the indication information indicates to report the measurement capability information in the first format, and the state of the first information element is the first state, measure the first measurement target based on a first capability of the terminal device, where the first capability is that a network controlled small measurement gap NCSG is supported, or the first capability is that an NCSG is not supported; or
in a case in which the indication information indicates to report the measurement capability information in the first format, and the state of the third information element is the seventh state, measure the first measurement target based on a first capability of the terminal device, where the first capability is that a network controlled small measurement gap NCSG is supported, or the first capability is that an NCSG is not supported.

Optionally, when the first measurement target is measured based on the first capability of the terminal device, the processing module 1002 is specifically configured to: assuming that the first capability is that the NCSG is not supported, measure the first measurement target within a first MG; or assuming that the first capability is that the NCSG is supported, measure the first measurement target within a first MG, or measure the first measurement target within a first NCSG. Optionally, the processing module 1002 is specifically configured to: in a case in which the indication information indicates to report the measurement capability information in the first format, and the state of the first information element is the first state, measure the first measurement target within a first MG or a first NCSG; or in a case in which the indication information indicates to report the measurement capability information in the first format, and the state of the third information element is the seventh state, measure the first measurement target within a first MG or a first NCSG.

In an embodiment, the communication module 1001 is further configured to receive configuration information for configuring a first NCSG.

For example, the configuration information includes first information indicating a start point of the first NCSG.

Based on the foregoing example, the processing module 1002 is further configured to determine the start point of the first NCSG as a time point determined based on a first time point and an advance relative to the first time point, where the first time point is a time point indicated by the first information, and the advance is a default value.

For example, the configuration information includes an offset value relative to a reference time point, a first advance relative to a first time point, and a second advance relative to a second time point, where the first time point is a time point indicated by the offset value, and the second time point is a time point indicated by the first advance.

Based on the foregoing example, the processing module 1002 is further configured to determine a start point of the first NCSG as a time point determined based on the first time point, the first advance, and the second advance.

For example, the configuration information includes an offset value relative to a reference time point and a first advance relative to a first time point, where the first time point is a time point indicated by the offset value, and candidate values of the first advance include a value greater than 0.5.

Based on the foregoing example, the processing module 1002 is further configured to determine a start point of the first NCSG as a time point determined based on the first time point and the first advance.

Optionally, the processing module 1002 is specifically configured to: in a case in which the indication information indicates to report the measurement capability information in the first format, the state of the first information element is the second state, and the state of the second information element is the third state, measure the first measurement target within a first MG; or
in a case in which the indication information indicates to report the measurement capability information in the first format, and the state of the third information element is the fifth state, measure the first measurement target within a first MG.

Optionally, the processing module 1002 is specifically configured to: in a case in which the indication information indicates to report the measurement capability information in the first format, the state of the first information element is the second state, and the state of the second information element is the fourth state, measure the first measurement target based on a configuration with no MG and no NCSG, or measure the first measurement target outside a second MG or a second NCSG, where the second MG or the second NCSG is configured by the network device for another measurement target; or
in a case in which the indication information indicates to report the measurement capability information in the first format, and the state of the third information element is the sixth state, measure the first measurement target based on a configuration with no MG and no NCSG, or measure the first measurement target outside a second MG or a second NCSG, where the second MG or the second NCSG is configured by the network device for another measurement target.

In an implementation, the communication apparatus may be specifically configured to implement the method performed by the network device in the embodiment shown in FIG. 3. The apparatus may be the network device, or may be a chip or a chipset in the network device, or a part of a chip that is configured to perform a related method function. The communication module 1001 is configured to communicate with the terminal device. The processing module 1002 is configured to: send indication information to the terminal device by using the communication module 1001, where the indication information indicates to report measurement capability information in a first format, and the measurement capability information in the first format includes information about whether an interrupt is generated during measurement; receive a first message from the terminal device by using the communication module 1001, where the first message carries the measurement capability information of the terminal device, and the measurement capability information indicates whether a measurement gap MG is needed and whether the interrupt is generated when a first measurement target is measured; and send, to the terminal device by using the communication module 1001, configuration information for measuring the first measurement target, where the configuration information is related to the indication information, and the configuration information is related to the first message.

For example, the first message includes a first information element and a second information element, where a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed. Alternatively, the first message includes a third information element, where a state of the third information element is one of the following three states: a fifth state indicating that the MG is needed, a sixth state indicating that no MG is needed and no interrupt is generated, or a seventh state indicating that no MG is needed and the interrupt is generated.

For example, in a case in which the indication information indicates to report the measurement capability information in the first format, and the state of the first information element is the first state, the configuration information is related to a first capability of the terminal device, and the first capability is that a network controlled small measurement gap NCSG is supported, or the first capability is that an NCSG is not supported.

Alternatively, in a case in which the indication information indicates to report the measurement capability information in the first format, and the state of the third information element is the seventh state, the configuration information is related to a first capability of the terminal device, and the first capability is that a network controlled small measurement gap NCSG is supported, or the first capability is that an NCSG is not supported.

For example, assuming that the first capability is that the NCSG is supported, the configuration information includes first configuration information for configuring the NCSG for the first measurement target, or the configuration information includes second configuration information for configuring the MG for the first measurement target. Alternatively, assuming that the first capability is that an NCSG is not supported, the configuration information includes second configuration information for configuring the MG for the first measurement target.

For example, in a case in which the indication information indicates to report the measurement capability information in the first format, and the state of the first information element is the first state, the configuration information includes the first configuration information for configuring the NCSG for the first measurement target, or the configuration information includes the second configuration information for configuring the MG for the first measurement target. Alternatively, in a case in which the indication information indicates to report the measurement capability information in the first format, and the state of the third information element is the seventh state, the configuration information includes the first configuration information for configuring the NCSG for the first measurement target, or the configuration information includes the second configuration information for configuring the MG for the first measurement target. For example, the first configuration information includes first information indicating a start point of a first NCSG.

Based on the foregoing example, the processing module 1002 is further configured to determine the start point of the first NCSG as a time point determined based on a first time point and an advance relative to the first time point, where the first time point is a time point indicated by the first information, and the advance is a default value.

For example, the configuration information includes second information for configuring a start point of a first NCSG, where the second information includes an offset value relative to a reference time point, a first advance relative to a first time point, and a second advance for the start point of the first NCSG relative to a second time point, the first time point is a time point indicated by the offset value, and the second time point is a time point indicated by the first advance.

For example, the configuration information includes third information for configuring a start point of a first NCSG, where the third information includes an offset value relative to a reference time point and a first advance for the start point of the first NCSG relative to a first time point, the first time point is a time point indicated by the offset value, and candidate values of the first advance include a value greater than 0.5.

For example, in a case in which the indication information indicates to report the measurement capability information in the first format, the state of the first information element is the second state, and the state of the second information element is the third state, the configuration information includes second configuration information, and the second configuration information is used for configuring the MG for the first measurement target.

Alternatively, in a case in which the indication information indicates to report the measurement capability information in the first format, and the state of the third information element is the fifth state, the configuration information includes second configuration information, and the second configuration information is used for configuring the MG for the first measurement target.

For example, in a case in which the indication information indicates to report the first message, the state of the first information element is the second state, and the state of the second information element is the fourth state, the configuration information does not include information for configuring an NCSG for the first measurement target and information for configuring the MG for the first measurement target.

Alternatively, in a case in which the indication information indicates to report the first message, and the state of the first information element is the sixth state, the configuration information does not include information for configuring an NCSG for the first measurement target and information for configuring the MG for the first measurement target.

In an implementation, the communication apparatus may be specifically configured to implement the method performed by the terminal device in the embodiment shown in FIG. 4. The apparatus may be the terminal device, or may be a chip or a chipset in the terminal device, or a part of a chip that is configured to perform a related method function. The communication module 1001 is configured to send a first message to the network device. The processing module 1002 is configured to measure a first measurement target based on the first message, where the first message indicates whether a measurement gap MG is needed and whether an interrupt is generated when the first measurement target is measured, and indicates that there is an association relationship between a state indicating whether the MG is needed and a state indicating whether the interrupt is generated.

For example, the first message includes a first information element and a second information element, where a state of the first information element is one of the following two states: a first state indicating that the MG is needed, or a second state indicating that no MG is needed, and a state of the second information element is one of the following two states: a third state indicating that the interrupt is generated, or a fourth state indicating that no interrupt is generated, and the first information element and the second information element meet at least one of the following association relationships: the second state is associated with the fourth state; and the first state is associated with the third state or the fourth state.

Alternatively, the first message includes a first information element and a third information element, and a state of the third information element is one of the following three states: a fifth state indicating that the MG is needed, a sixth state indicating that no MG is needed and no interrupt is generated, or a seventh state indicating that no MG is needed and the interrupt is generated, where the first information element and the third information element meet at least one of the following association relationships: the first state is associated with the fifth state or the seventh state; and the second state is associated with the sixth state.

Optionally, the processing module 1002 is specifically configured to: in a case in which the state of the second information element is the third state, measure the first measurement target based on a first capability of the terminal device, where the first capability is that a network controlled small measurement gap NCSG is supported, or the first capability is that an NCSG is not supported; or
in a case in which the state of the third information element is the seventh state, measure the first measurement target based on a first capability of the terminal device, where the first capability is that a network controlled small measurement gap NCSG is supported, or the first capability is that an NCSG is not supported.

Optionally, when the first measurement target is measured based on the first capability of the terminal device, the processing module 1002 is specifically configured to: assuming that the first capability is that the NCSG is not supported, measure the first measurement target within a first MG; or assuming that the first capability is that the NCSG is supported, measure the first measurement target within a first MG, or measure the first measurement target within a first NCSG. Optionally, the processing module 1002 is specifically configured to: in a case in which the state of the second information element is the third state, measure the first measurement target within a first MG, or measure the first measurement target within a first NCSG; or
in a case in which the state of the third information element is the seventh state, measure the first measurement target within a first MG, or measure the first measurement target within a first NCSG.

In an embodiment, the communication module 1001 is further configured to receive configuration information for configuring the first NCSG.

For example, the configuration information includes first information indicating a start point of the first NCSG.

Based on the foregoing example, the processing module 1002 may be further configured to determine the start point of the first NCSG as a time point determined based on a first time point and an advance relative to the first time point, where the first time point is a time point indicated by the first information, and the advance is a default value.

For example, the configuration information includes an offset value relative to a reference time point, a first advance relative to a first time point, and a second advance relative to a second time point, where the first time point is a time point indicated by the offset value, and the second time point is a time point indicated by the first advance.

Based on the foregoing example, the processing module 1002 may be further configured to determine a start point of the first NCSG as a time point determined based on the first time point, the first advance, and the second advance.

For example, the configuration information includes an offset value relative to a reference time point and a first advance relative to a first time point, where the first time point is a time point indicated by the offset value, and candidate values of the first advance include a value greater than 0.5.

Based on the foregoing example, the processing module 1002 may be further configured to determine a start point of the first NCSG as a time point determined based on the first time point and the first advance.

For example, a quantity of the candidate values of the first advance is greater than 3.

Optionally, the processing module 1002 is specifically configured to: in a case in which the state of the first information element is the first state, and the state of the second information element is the fourth state, measure the first measurement target within a first MG; or in a case in which the state of the third information element is the fifth state, measure the first measurement target within a first MG.

Optionally, the processing module 1002 is specifically configured to: in a case in which the state of the first information element is the second state, and the state of the second information element is the fourth state, measure the first measurement target based on a configuration with no MG and no NCSG, or measure the first measurement target outside a second MG or a second NCSG, where the second MG or the second NCSG is configured by the network device for another measurement target; or
in a case in which the state of the third information element is the sixth state, measure the first measurement target based on a configuration with no MG and no NCSG, or measure the first measurement target outside a second MG or a second NCSG, where the second MG or the second NCSG is configured by the network device for another measurement target.

In an embodiment, the communication module 1001 is further configured to receive configuration information for configuring the first MG.

In an implementation, the communication apparatus may be specifically configured to implement the method performed by the network device in the embodiment shown in FIG. 4. The apparatus may be the network device, or may be a chip or a chipset in the network device, or a part of a chip that is configured to perform a related method function. The communication module 1001 is configured to communicate with the terminal device. The processing module 1002 is configured to: receive a first message from the terminal device by using the communication module 1001, and send, to the terminal device by using the communication module 1001, configuration information for measuring a first measurement target, where the first message indicates whether a measurement gap MG is needed and whether an interrupt is generated when the first measurement target is measured, and indicates that there is an association relationship between a state indicating whether the MG is needed and a state indicating whether the interrupt is generated. The configuration information is related to the first message.

For example, the first message includes a first information element and a second information element, where a state of the first information element is one of the following two states: a first state indicating that the MG is needed, or a second state indicating that no MG is needed, and a state of the second information element is one of the following two states: a third state indicating that the interrupt is generated, or a fourth state indicating that no interrupt is generated, and the first information element and the second information element meet at least one of the following association relationships: the second state is associated with the fourth state; and the first state is associated with the third state or the fourth state.

Alternatively, the first message includes a first information element and a third information element, and a state of the third information element is one of the following three states: a fifth state indicating that the MG is needed, a sixth state indicating that no MG is needed and no interrupt is generated, or a seventh state indicating that no MG is needed and the interrupt is generated, where the first information element and the third information element meet at least one of the following association relationships: the first state is associated with the fifth state or the seventh state; and the second state is associated with the sixth state.

For example, in a case in which the state of the second information element is the third state, configuration information is determined based on a first capability of the terminal device, and the first capability is that a network controlled small measurement gap NCSG is supported, or the first capability is that an NCSG is not supported.

Alternatively, in a case in which the state of the third information element is the seventh state, configuration information is determined based on a first capability of the terminal device, and the first capability is that a network controlled small measurement gap NCSG is supported, or the first capability is that an NCSG is not supported.

For example, assuming that the first capability is that the NCSG is supported, the configuration information includes first configuration information for configuring the NCSG for the first measurement target, or the configuration information includes second configuration information for configuring the MG for the first measurement target. Alternatively, assuming that the first capability is that the NCSG is not supported, the configuration information includes second configuration information for configuring the MG for the first measurement target.

For example, in a case in which the state of the second information element is the third state, the configuration information includes first configuration information for configuring the NCSG for the first measurement target, or the configuration information includes second configuration information for configuring the MG for the first measurement target.

Alternatively, in a case in which the state of the third information element is the seventh state, the configuration information includes first configuration information for configuring the NCSG for the first measurement target, or the configuration information includes second configuration information for configuring the MG for the first measurement target.

For example, the first configuration information includes first information indicating a start point of a first NCSG.

Based on the foregoing example, the processing module 1002 is further configured to determine the start point of the first NCSG as a time point determined based on a first time point and an advance relative to the first time point, where the first time point is a time point indicated by the first information, and the advance is a default value.

For example, the configuration information includes an offset value relative to a reference time point, a first advance relative to a first time point, and a second advance for the start point of the first NCSG relative to a second time point, where the first time point is a time point indicated by the offset value, and the second time point is a time point indicated by the first advance.

For example, the configuration information includes an offset value relative to a reference time point and a first advance for the start point of the first NCSG relative to a first time point, where the first time point is a time point indicated by the offset value, and candidate values of the first advance include a value greater than 0.5.

For example, a quantity of the candidate values of the first advance is greater than 3.

For example, in a case in which the state of the first information element is the second state, and the state of the second information element is the fourth state, the configuration information does not include information for configuring an NCSG for the first measurement target and information for configuring the MG for the first measurement target.

Alternatively, in a case in which the state of the third information element is the sixth state, the configuration information does not include information for configuring an NCSG for the first measurement target and information for configuring the MG for the first measurement target. For example, in a case in which the state of the first information element is the first state, and the state of the second information element is the fourth state, the configuration information includes second configuration information, and the second configuration information is used for configuring the MG for the first measurement target. Alternatively, in a case in which the state of the third information element is the fifth state, the configuration information includes second configuration information, and the second configuration information is used for configuring the MG for the first measurement target.

In an implementation, the communication apparatus may be specifically configured to implement the methods performed by the terminal device in the embodiments shown in FIG. 5 to FIG. 9. The apparatus may be the terminal device, or may be a chip or a chipset in the terminal device, or a part of a chip that is configured to perform a related method function. The communication module 1001 is configured to receive first information from a network device. The processing module 1002 is configured to determine a start point of a first NCSG based on first information and a first advance, where the first information is used for configuring the start point of the NCSG; and the first advance is a default value.

In an implementation, the communication apparatus may be specifically configured to implement the methods performed by the network device in the embodiment shown in FIG. 5 to FIG. 9. The apparatus may be the network device, or may be a chip or a chipset in the network device, or a part of a chip that is configured to perform a related method function. The communication module 1001 is configured to send first information to the terminal device. The processing module 1002 is configured to determine a start point of a first NCSG based on first information and a first advance, where the first information is used for configuring the start point of the first NCSG; and the first advance is a default value.

In an implementation, the communication apparatus may be specifically configured to implement the methods performed by the terminal device in the embodiments shown in FIG. 5 to FIG. 9. The apparatus may be the terminal device, or may be a chip or a chipset in the terminal device, or a part of a chip that is configured to perform a related method function. The communication module 1001 is configured to receive second information from a network device. The processing module 1002 is configured to determine a start point of a first NCSG based on the second information, where the second information is used for configuring the start point of the NCSG, the second information includes an offset value relative to a reference time point, a first advance relative to a first time point, and a second advance relative to a second time point, the first time point is a time point indicated by the offset value, and the second time point is a time point indicated by the first advance.

In an implementation, the communication apparatus may be specifically configured to implement the methods performed by the network device in the embodiment shown in FIG. 5 to FIG. 9. The apparatus may be the network device, or may be a chip or a chipset in the network device, or a part of a chip that is configured to perform a related method function. The communication module 1001 is configured to send second information to the terminal device. The processing module 1002 is configured to determine a start point of a first NCSG based on the second information. The second information is used for configuring the start point of the NCSG, and the second information includes an offset value relative to a reference time point, a first advance relative to a first time point, and a second advance relative to a second time point, where the first time point is a time point indicated by the offset value, and the second time point is a time point indicated by the first advance.

In an implementation, the communication apparatus may be specifically configured to implement the methods performed by the terminal device in the embodiments shown in FIG. 5 to FIG. 9. The apparatus may be the terminal device, or may be a chip or a chipset in the terminal device, or a part of a chip that is configured to perform a related method function. The communication module 1001 is configured to receive third information from a network device. The processing module 1002 is configured to determine a start point of a first NCSG based on the third information. The third information is used for configuring the start point of the NCSG, and the third information includes an offset value relative to a reference time point and a first advance relative to a first time point, where the first time point is a time point indicated by the offset value, and candidate values of the first advance include a value greater than 0.5.

For example, a quantity of the candidate values of the first advance is greater than 3.

In an implementation, the communication apparatus may be specifically configured to implement the methods performed by the network device in the embodiment shown in FIG. 5 to FIG. 9. The apparatus may be the network device, or may be a chip or a chipset in the network device, or a part of a chip that is configured to perform a related method function. The communication module 1001 is configured to send third information to the terminal device. The processing module 1002 is configured to determine a start point of a first NCSG based on the third information. The third information is used for configuring the start point of the NCSG, and the third information includes an offset value relative to a reference time point and a first advance relative to a first time point, where the first time point is a time point indicated by the offset value, and candidate values of the first advance include a value greater than 0.5.

For example, a quantity of the candidate values of the first advance is greater than 3.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for the function or implementation of each module in this embodiment of this application, further refer to the related description of the method embodiment.

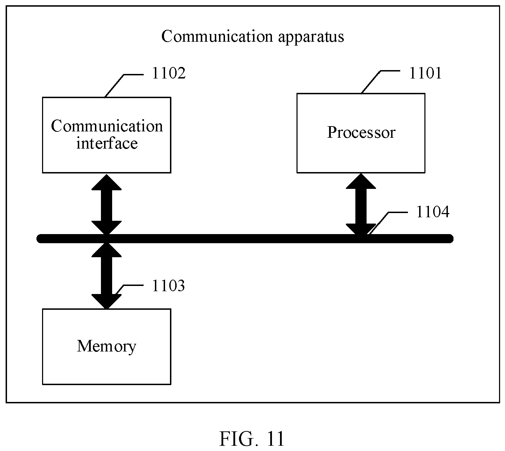

In a possible manner, a communication apparatus may be shown in FIG. 11. The apparatus may be a communication device or a chip in a communication device. The communication device may be the terminal device in the foregoing embodiment or the network device in the foregoing embodiment. The apparatus includes a processor 1101 and a communication interface 1102, and may further include a memory 1103. A processing module 1002 may be the processor 1101. A communication module 1001 may be the communication interface 1102.

The processor 1101 may be a CPU, a digital processing unit, or the like. The communication interface 1102 may be a transceiver, an interface circuit such as a transceiver circuit, a transceiver chip, or the like. The apparatus further includes a memory 1103, configured to store a program executed by the processor 1101. The memory 1103 may be a non-volatile memory such as a hard disk drive (hard disk drive, HDD) or a solid-state drive (solid-state drive, SSD), or may be a volatile memory (volatile memory) such as a random-access memory (random-access memory, RAM). The memory 1103 is any other medium that can be used to carry or store expected program code in a form of an instruction or a data structure and that can be accessed by a computer, but is not limited thereto.

The processor 1101 is configured to execute program code stored in the memory 1103, and is specifically configured to perform actions of the processing module 1002. Details are not described herein again in this application. The communication interface 1102 is specifically configured to perform actions of the communication module 1001. Details are not described herein again in this application.

In this embodiment of this application, a specific connection medium between the communication interface 1102, the processor 1101, and the memory 1103 is not limited. In this embodiment of this application, the memory 1103, the processor 1101, and the communication interface 1102 are connected through a bus 1104 in FIG. 11. The bus is represented by using a bold line in FIG. 11. A manner of connection between other components is only an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

An embodiment of the present invention further provides a computer-readable storage medium, configured to store computer software instructions that need to be executed by the foregoing processor, and the computer software instructions include programs that need to be executed by the foregoing processor.

An embodiment of this application further provides a communication system, including a communication apparatus configured to implement functions of the terminal device in the embodiment in FIG. 3 and a communication apparatus configured to implement functions of the network device in the embodiment in FIG. 3.

An embodiment of this application further provides a communication system, including a communication apparatus configured to implement functions of the terminal device in the embodiment in FIG. 4 and a communication apparatus configured to implement functions of the network device in the embodiment in FIG. 4.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operation steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that persons skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving indication information from a network device, wherein the indication information indicates to report measurement capability information in a first format, and the measurement capability information in the first format comprises information about whether an interrupt is generated during measurement;
sending a first message to the network device, wherein the first message carries the measurement capability information of a terminal device, and the measurement capability information indicates whether a measurement gap MG is needed and whether the interrupt is generated when a first measurement target is measured; and
measuring the first measurement target based on the indication information and the first message.

2. The method according to claim 1, wherein the first message comprises a first information element and a second information element, wherein a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed; or
the first message comprises a third information element, wherein a state of the third information element is one of the following three states: a fifth state indicating that the MG is needed, a sixth state indicating that no MG is needed and no interrupt is generated, or a seventh state indicating that no MG is needed and the interrupt is generated.

3. The method according to claim 2, wherein the measuring the first measurement target based on the indication information and the first message comprises:
in a case in which the indication information indicates to report the measurement capability information in the first format, and the state of the first information element is the first state, if the terminal device does not support a network controlled small measurement gap NCSG, measuring the first measurement target within a first MG; or if the terminal device supports an NCSG, measuring the first measurement target within a first MG or a first NCSG; or
in a case in which the indication information indicates to report the measurement capability information in the first format, and the state of the third information element is the seventh state, if the terminal device does not support an NCSG, measuring the first measurement target within a first MG; or if the terminal device supports an NCSG, measuring the first measurement target within a first MG or a first NCSG.

4. The method according to claim 2, wherein the measuring the first measurement target based on the indication information and the first message comprises:
in a case in which the indication information indicates to report the measurement capability information in the first format, and the state of the first information element is the first state, measuring the first measurement target within a first MG or a first NCSG; or
in a case in which the indication information indicates to report the measurement capability information in the first format, and the state of the third information element is the seventh state, measuring the first measurement target within a first MG or a first NCSG.

5. The method according to claim 3 or 4, wherein the method further comprises:
receiving configuration information for configuring the first NCSG.

6. The method according to claim 5, wherein the configuration information comprises first information indicating a start point of the first NCSG; and
the method further comprises:
determining the start point of the first NCSG as a time point determined based on a first time point and an advance relative to the first time point, wherein the first time point is a time point indicated by the first information, and the advance is a default value.

7. The method according to claim 5, wherein the configuration information comprises an offset value relative to a reference time point, a first advance relative to a first time point, and a second advance relative to a second time point, wherein the first time point is a time point indicated by the offset value, and the second time point is a time point indicated by the first advance; and
the method further comprises:
determining a start point of the first NCSG as a time point determined based on the first time point, the first advance, and the second advance.

8. The method according to claim 5, wherein the configuration information comprises an offset value relative to a reference time point and a first advance relative to a first time point, wherein the first time point is a time point indicated by the offset value, and candidate values of the first advance comprise a value greater than 0.5; and
the method further comprises:
determining a start point of the first NCSG as a time point determined based on the first time point and the first advance.

9. The method according to claim 2, wherein the measuring the first measurement target based on the indication information and the first message comprises:
in a case in which the indication information indicates to report the measurement capability information in the first format, the state of the first information element is the second state, and the state of the second information element is the third state, measuring the first measurement target within a first MG; or
in a case in which the indication information indicates to report the measurement capability information in the first format, and the state of the third information element is the fifth state, measuring the first measurement target within a first MG.

10. The method according to claim 2, wherein the measuring the first measurement target based on the indication information and the first message comprises:
in a case in which the indication information indicates to report the measurement capability information in the first format, the state of the first information element is the second state, and the state of the second information element is the fourth state, measuring the first measurement target based on a configuration with no MG and no NCSG, or measuring the first measurement target outside a second MG or a second NCSG, wherein the second MG or the second NCSG is configured by the network device for another measurement target; or
in a case in which the indication information indicates to report the measurement capability information in the first format, and the state of the third information element is the sixth state, measuring the first measurement target based on a configuration with no MG and no NCSG, or measuring the first measurement target outside a second MG or a second NCSG, wherein the second MG or the second NCSG is configured by the network device for another measurement target.

11. A communication method, wherein the method comprises:
sending indication information to a terminal device, wherein the indication information indicates to report measurement capability information in a first format, and the measurement capability information in the first format comprises information about whether an interrupt is generated during measurement;
receiving a first message from the terminal device, wherein the first message carries the measurement capability information of the terminal device, and the measurement capability information indicates whether a measurement gap MG is needed and whether the interrupt is generated when a first measurement target is measured; and
sending, to the terminal device, configuration information for measuring the first measurement target, wherein the configuration information is related to the indication information, and the configuration information is related to the first message.

12. The method according to claim 11, wherein the first message comprises a first information element and a second information element, wherein a state of the first information element is one of two states: a first state indicating that the interrupt is generated, or a second state indicating that no interrupt is generated, and a state of the second information element is one of two states: a third state indicating that the MG is needed, or a fourth state indicating that no MG is needed; or
the first message comprises a third information element, wherein a state of the third information element is one of the following three states: a fifth state indicating that the MG is needed, a sixth state indicating that no MG is needed and no interrupt is generated, or a seventh state indicating that no MG is needed and the interrupt is generated.

13. The method according to claim 12, wherein in a case in which the indication information indicates to report the measurement capability information in the first format, and the state of the first information element is the first state, if the terminal device supports an NCSG, the configuration information comprises first configuration information for configuring the network controlled small gap NCSG for the first measurement target, or the configuration information comprises second configuration information for configuring the MG for the first measurement target; or if the terminal device does not support an NCSG, the configuration information comprises second configuration information for configuring the MG for the first measurement target; or
in a case in which the indication information indicates to report the measurement capability information in the first format, and the state of the third information element is the seventh state, if the terminal device supports an NCSG, the configuration information comprises first configuration information for configuring the NCSG for the first measurement target, or the configuration information comprises second configuration information for configuring the MG for the first measurement target; or if the terminal device does not support an NCSG, the configuration information comprises second configuration information for configuring the MG for the first measurement target.

14. The method according to claim 13, wherein in a case in which the indication information indicates to report the measurement capability information in the first format, and the state of the first information element is the first state, the configuration information comprise the first configuration information for configuring the NCSG for the first measurement target, or the configuration information comprises the second configuration information for configuring the MG for the first measurement target; or
in a case in which the indication information indicates to report the measurement capability information in the first format, and the state of the third information element is the seventh state, the configuration information comprises the first configuration information for configuring the NCSG for the first measurement target, or the configuration information comprises the second configuration information for configuring the MG for the first measurement target.

15. The method according to claim 13 or 14, wherein the first configuration information comprises first information indicating a start point of a first NCSG; and the method further comprises:
determining the start point of the first NCSG as a time point determined based on a first time point and an advance relative to the first time point, wherein the first time point is a time point indicated by the first information, and the advance is a default value.

16. The method according to claim 13 or 14, wherein the configuration information comprises second information for configuring a start point of a first NCSG, wherein the second information comprises an offset value relative to a reference time point, a first advance relative to a first time point, and a second advance for the start point of the first NCSG relative to a second time point, the first time point is a time point indicated by the offset value, and the second time point is a time point indicated by the first advance.

17. The method according to claim 13 or 14, wherein the configuration information comprises third information for configuring a start point of a first NCSG, wherein the third information comprises an offset value relative to a reference time point and a first advance for the start point of the first NCSG relative to a first time point, the first time point is a time point indicated by the offset value, and candidate values of the first advance comprise a value greater than 0.5.

18. The method according to claim 12, wherein in a case in which the indication information indicates to report the measurement capability information in the first format, the state of the first information element is the second state, and the state of the second information element is the third state, the configuration information comprises second configuration information, and the second configuration information is used for configuring the MG for the first measurement target; or
in a case in which the indication information indicates to report the measurement capability information in the first format, and the state of the third information element is the fifth state, the configuration information comprises second configuration information, and the second configuration information is used for configuring the MG for the first measurement target.

19. The method according to claim 12, wherein in a case in which the indication information indicates to report the first message, the state of the first information element is the second state, and the state of the second information element is the fourth state, the configuration information does not comprise information for configuring an NCSG for the first measurement target and information for configuring the MG for the first measurement target; or
in a case in which the indication information indicates to report the first message, and the state of the first information element is the sixth state, the configuration information does not comprise information for configuring an NCSG for the first measurement target and information for configuring the MG for the first measurement target.

20. A communication apparatus, wherein the apparatus comprises:
a communication module, configured to: receive indication information from a network device, wherein the indication information indicates to report measurement capability information in a first format, and the measurement capability information in the first format comprises information about whether an interrupt is generated during measurement; and
send a first message to the network device, wherein the first message carries the measurement capability information of a terminal device, and the measurement capability information indicates whether a measurement gap MG is needed and whether the interrupt is generated when a first measurement target is measured; and
a processing module, configured to measure the first measurement target based on the indication information and the first message.

21. The apparatus according to claim 20, wherein the first message comprises a first information element and a second information element, wherein a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed; or
the first message comprises a third information element, wherein a state of the third information element is one of the following three states: a fifth state indicating that the MG is needed, a sixth state indicating that no MG is needed and no interrupt is generated, or a seventh state indicating that no MG is needed and the interrupt is generated.

22. The apparatus according to claim 21, wherein the processing module is specifically configured to:
in a case in which the indication information indicates to report the measurement capability information in the first format, and the state of the first information element is the first state, if the terminal device does not support a network controlled small measurement gap NCSG, measure the first measurement target within a first MG; or if the terminal device supports an NCSG, measure the first measurement target within a first MG or a first NCSG; or
in a case in which the indication information indicates to report the measurement capability information in the first format, and the state of the third information element is the seventh state, if the terminal device does not support an NCSG, measure the first measurement target within a first MG; or if the terminal device supports an NCSG, measure the first measurement target within a first MG or a first NCSG.

23. The apparatus according to claim 21, wherein the processing module is specifically configured to:
in a case in which the indication information indicates to report the measurement capability information in the first format, and the state of the first information element is the first state, measure the first measurement target within a first MG or a first NCSG; or
in a case in which the indication information indicates to report the measurement capability information in the first format, and the state of the third information element is the seventh state, measure the first measurement target within a first MG or a first NCSG.

24. The apparatus according to claim 22 or 23, wherein the communication module is further configured to:
receive configuration information for configuring the first NCSG.

25. The apparatus according to claim 24, wherein the configuration information comprises first information indicating a start point of the first NCSG; and
the processing module is further configured to:
determine the start point of the first NCSG as a time point determined based on a first time point and an advance relative to the first time point, wherein the first time point is a time point indicated by the first information, and the advance is a default value.

26. The apparatus according to claim 24, wherein the configuration information comprises an offset value relative to a reference time point, a first advance relative to a first time point, and a second advance relative to a second time point, wherein the first time point is a time point indicated by the offset value, and the second time point is a time point indicated by the first advance; and
the processing module is further configured to:
determine a start point of the first NCSG as a time point determined based on the first time point, the first advance, and the second advance.

27. The apparatus according to claim 24, wherein the configuration information comprises an offset value relative to a reference time point and a first advance relative to a first time point, wherein the first time point is a time point indicated by the offset value, and candidate values of the first advance comprise a value greater than 0.5; and
the processing module is further configured to:
determine a start point of the first NCSG as a time point determined based on the first time point and the first advance.

28. The apparatus according to claim 21, wherein the processing module is specifically configured to:
in a case in which the indication information indicates to report the measurement capability information in the first format, the state of the first information element is the second state, and the state of the second information element is the third state, measure the first measurement target within a first MG; or
in a case in which the indication information indicates to report the measurement capability information in the first format, and the state of the third information element is the fifth state, measure the first measurement target within a first MG.

29. The apparatus according to claim 21, wherein the processing module is specifically configured to:
in a case in which the indication information indicates to report the measurement capability information in the first format, the state of the first information element is the second state, and the state of the second information element is the fourth state, measure the first measurement target based on a configuration with no MG and no NCSG, or measure the first measurement target outside a second MG or a second NCSG, wherein the second MG or the second NCSG is configured by the network device for another measurement target; or
in a case in which the indication information indicates to report the measurement capability information in the first format, and the state of the third information element is the sixth state, measure the first measurement target based on a configuration with no MG and no NCSG, or measure the first measurement target outside a second MG or a second NCSG, wherein the second MG or the second NCSG is configured by the network device for another measurement target.

30. A communication apparatus, wherein the apparatus comprises:
a communication module, configured to communicate with a terminal device; and
a processing module, configured to: send indication information to the terminal device by using the communication module, wherein the indication information indicates to report measurement capability information in a first format, and the measurement capability information in the first format comprises information about whether an interrupt is generated during measurement; and
receive a first message from the terminal device by using the communication module, wherein the first message carries the measurement capability information of the terminal device, and the measurement capability information indicates whether a measurement gap MG is needed and whether the interrupt is generated when a first measurement target is measured; and
send, to the terminal device by using the communication module, configuration information for measuring the first measurement target, wherein the configuration information is related to the indication information, and the configuration information is related to the first message.

31. The apparatus according to claim 30, wherein the first message comprises a first information element and a second information element, wherein a state of the first information element is one of the following two states: a first state indicating that the interrupt is generated, or a second state indicating that no interrupt is generated, and a state of the second information element is one of the following two states: a third state indicating that the MG is needed, or a fourth state indicating that no MG is needed; or
the first message comprises a third information element, wherein a state of the third information element is one of the following three states: a fifth state indicating that the MG is needed, a sixth state indicating that no MG is needed and no interrupt is generated, or a seventh state indicating that no MG is needed and the interrupt is generated.

32. The apparatus according to claim 31, wherein in a case in which the indication information indicates to report the measurement capability information in the first format, and the state of the first information element is the first state, if the terminal device supports an NCSG, the configuration information comprises first configuration information for configuring the network controlled small gap NCSG for the first measurement target, or the configuration information comprises second configuration information for configuring the MG for the first measurement target; or if the terminal device does not support an NCSG, the configuration information comprises second configuration information for configuring the MG for the first measurement target; or
in a case in which the indication information indicates to report the measurement capability information in the first format, and the state of the third information element is the seventh state, if the terminal device supports an NCSG, the configuration information comprises first configuration information for configuring the NCSG for the first measurement target, or the configuration information comprises second configuration information for configuring the MG for the first measurement target; or if the terminal device does not support an NCSG, the configuration information comprises second configuration information for configuring the MG for the first measurement target.

33. The apparatus according to claim 32, wherein
in a case in which the indication information indicates to report the measurement capability information in the first format, and the state of the first information element is the first state, the configuration information comprises the first configuration information for configuring the NCSG for the first measurement target, or the configuration information comprises the second configuration information for configuring the MG for the first measurement target; or
in a case in which the indication information indicates to report the measurement capability information in the first format, and the state of the third information element is the seventh state, the configuration information comprises the first configuration information for configuring the NCSG for the first measurement target, or the configuration information comprises the second configuration information for configuring the MG for the first measurement target.

34. The apparatus according to claim 32 or 33, wherein the first configuration information comprises first information indicating a start point of a first NCSG; and the processing module is further configured to:
determine the start point of the first NCSG as a time point determined based on a first time point and an advance relative to the first time point, wherein the first time point is a time point indicated by the first information, and the advance is a default value.

35. The apparatus according to claim 32 or 33, wherein the configuration information comprises second information for configuring a start point of a first NCSG, wherein the second information comprises an offset value relative to a reference time point, a first advance relative to a first time point, and a second advance for the start point of the first NCSG relative to a second time point, the first time point is a time point indicated by the offset value, and the second time point is a time point indicated by the first advance.

36. The apparatus according to claim 32 or 33, wherein the configuration information comprises third information for configuring a start point of a first NCSG, wherein the third information comprises an offset value relative to a reference time point and a first advance for the start point of the first NCSG relative to a first time point, the first time point is a time point indicated by the offset value, and candidate values of the first advance comprise a value greater than 0.5.

37. The apparatus according to claim 31, wherein in a case in which the indication information indicates to report the measurement capability information in the first format, the state of the first information element is the second state, and the state of the second information element is the third state, the configuration information comprises second configuration information, and the second configuration information is used for configuring the MG for the first measurement target; or
in a case in which the indication information indicates to report the measurement capability information in the first format, and the state of the third information element is the fifth state, the configuration information comprises second configuration information, and the second configuration information is used for configuring the MG for the first measurement target.

38. The apparatus according to claim 31, wherein in a case in which the indication information indicates to report the first message, the state of the first information element is the second state, and the state of the second information element is the fourth state, the configuration information does not comprise information for configuring an NCSG for the first measurement target and information for configuring the MG for the first measurement target; or
in a case in which the indication information indicates to report the first message, and the state of the first information element is the sixth state, the configuration information does not comprise information for configuring an NCSG for the first measurement target and information for configuring the MG for the first measurement target.

39. A communication apparatus, wherein the apparatus comprises a processor and a memory, and the processor is coupled to the memory;
the memory is configured to store a program or instructions; and
the processor is configured to invoke the program or the instructions to enable the communication apparatus to perform the method according to any one of claims 1 to 10.

40. A communication apparatus, wherein the apparatus comprises a processor and a memory, and the processor is coupled to the memory;
the memory is configured to store a program or instructions; and
the processor is configured to invoke the program or the instructions to enable the communication apparatus to perform the method according to any one of claims 11 to 19.

41. A computer-readable storage medium, wherein the computer-readable storage medium is configured to store computer instructions, and when the computer instructions are run on a computer, the computer is enabled to perform the method according to any one of claims 1 to 10.

42. A computer-readable storage medium, wherein the computer-readable storage medium is configured to store computer instructions, and when the computer instructions are run on a computer, the computer is enabled to perform the method according to any one of claims 11 to 19.
